# EUROPEAN PATENT APPLICATION

(11) **EP 3 483 687 A1**
(43) Date of publication of application: **15.05.2019**
(21) Application number: 17823952.1
(22) Date of filing: 15.06.2017
(51) Int. Cl.: G05D 1/02, A63H 11/00, B25J 5/00

(54) **ROBOT**

(30) Priority: 08.07.2016 JP 2016135805
(71) Applicant: Panasonic Intellectual Property Management Co., Ltd., Osaka-shi, Osaka 540-6207 (JP)
(72) Inventor: MIYAZAKI, Ryouta, Osaka-shi, Osaka 540-6207 (JP); OGAWA, Kento, Osaka-shi, Osaka 540-6207 (JP); HIGUCHI, Seiya, Osaka-shi, Osaka 540-6207 (JP)
(74) Representative: Grünecker Patent- und Rechtsanwälte PartG mbB
(86) International application number: PCT/JP2017/022041
(87) International publication number: WO 2018/008345

(57) **Abstract**

[Abstract] If a value obtained by excluding a gravitational component from an acceleration detected by an acceleration sensor is continuously less than a reference value for a certain time, a travelling state determination unit determines that the travelling state of a robot 1 as frictional surface travelling. The travelling state determination unit calculates an attitude angle of the robot 1 from angular velocity in a pitch direction, which is detected by an angular velocity sensor, and if the calculated attitude angle is kept at a lower limit angle or more for a determination time, sets the attitude angle at the end of the determination time as an attitude control angle. When the travelling state of the robot 1 is determined as frictional surface travelling, an attitude control unit moves a counterweight forward by a movement amount corresponding to the attitude control angle.

## Description

### Technical Field

The present invention relates to a robot that determines its own state.

### Background Art

Heretofore, various robots have been proposed.

PTL 1 discloses a multi-legged walking robot having four legs (for example, page 8, lines 15 to 17). The multi-legged walking robot disclosed in PTL 1 includes an acceleration sensor that detects acceleration in three-axis (X-axis, Y-axis, and Z-axis) directions, and an angular velocity sensor that detects rotation angular velocity in three-angle (R-angle, P-angle, and Y-angle) directions (for example, page 8, line 26 to page 9, line 8). When detecting that a user lifts up the robot based on detection results of the acceleration sensor and the angular velocity sensor (for example, page 9, lines 5 to 14), the robot stops the motion of its legs (for example, page 10. lines 13 to 20). This can prevent the robot from injuring the user (for example, page 6, lines 11 to 12).

### Citation List

### Patent Literature

PTL 1: International Publication No. WO2000/032360

### Summary of Invention

### Technical Problem

The above-mentioned conventional technique needs to be further improved. Solution to Problem

To solve the above-mentioned problem, a robot according to an aspect of the present disclosure includes:
a spherical housing;
a frame disposed in the housing;
a display unit that is provided on the frame, and that displays at least a portion of a face of the robot;
a set of drive wheels that are provided on the frame, and that rotate and move the housing while being in contact with an inner circumferential face of the housing;
a weight drive mechanism that is provided on the frame, and that reciprocates a weight in a predetermined direction;
an angular velocity sensor that detects angular velocity about a crosswise direction that is perpendicular to a travelling direction of the housing; and
a control circuit that, if the control circuit determines, while the housing is being rotated and moved, that a rotational angle of the housing when viewed from front in the travelling direction changes upward beyond a predetermined angle based on a change in the angular velocity about the crosswise direction, moves the weight frontward in the travelling direction of the housing by a distance corresponding to the rotational angle.

### Advantageous Effects of Invention

From the above-mentioned aspect, further improvement can be achieved.

### Brief Description of Drawings

Fig. 1 is a perspective view illustrating the external appearance of a robot according to an embodiment of the present disclosure.
Fig. 2 is a perspective view illustrating the inside of the robot according to the embodiment of the present disclosure.
Fig. 3 is a side view illustrating the inside of the robot according to the embodiment of the present disclosure when viewed from A in Fig. 2.
Fig. 4 is a side view illustrating linear movement of the robot according to the embodiment of the present disclosure when viewed from A in Fig. 2.
Fig. 5 is a plan view illustrating rotation of the robot according to the embodiment of the present disclosure when viewed from B in Fig. 2.
Fig. 6 is a perspective view illustrating rotation of the robot according to the embodiment of the present disclosure.
Fig. 7 is a view illustrating a weight drive mechanism in the side view of Fig. 3.
Fig. 8A is a perspective view illustrating the operation of the drive mechanism for the counterweight to drive the counterweight in a predetermined linear direction.
Fig. 8B is a side view illustrating the operation of the counterweight drive mechanism to drive the counterweight in the predetermined linear direction.
Fig. 8C is a side view illustrating the state where the counterweight reciprocates in the predetermined linear direction in the side view of Fig. 3.
Fig. 9A is a perspective view illustrating the operation of the counterweight drive mechanism to rotate the swing arm.
Fig. 9B is a side view illustrating the operation of the counterweight drive mechanism to rotate the swing arm.
Fig. 9C is a plan view illustrating the state where the swing arm of the robot according to the embodiment of the present disclosure rotates when viewed from B in Fig. 2.
Fig. 10 is a side view illustrating the robot's attitude in which the counterweight is located to the front when viewed from A in Fig. 2.
Fig. 11 is a side view illustrating the robot's attitude in which the counterweight is located to the rear when viewed from A in Fig. 2.
Fig. 12 is a front view illustrating the robot's attitude in which the counterweight is located to the right when viewed from C in Fig. 2.
Fig. 13 is a front view illustrating the robot's attitude in which the counterweight is located to the left when viewed from C in Fig. 2.
Fig. 14 is a view illustrating an example of overall configuration of a robot system using the robot according to the embodiment of the present disclosure.
Fig. 15 is a block diagram illustrating the robot according to the embodiment of the present disclosure.
Fig. 16 is a flow chart illustrating an example of a main routine of the robot according to the embodiment of the present disclosure.
Fig. 17 is a flow chart illustrating details of travelling state determination processing (S103 in Fig. 16).
Fig. 18 is a flow chart illustrating details of moving state determination processing (S201 in Fig. 17).
Fig. 19 is a flow chart illustrating details of attitude determination processing (S203 in Fig. 17).
Fig. 20 is a view illustrating of attitude angle of the robot.
Fig. 21 is a graph illustrating the attitude determination processing.
Fig. 22 is a flow chart illustrating details of frictional surface travelling determination processing (S205 in Fig. 17).
Fig. 23A is a schematic view illustrating the state of the robot during "normal travelling" as the travelling state.
Fig. 23B is a schematic view illustrating the state of the robot during "frictional surface travelling" as the travelling state.
Fig. 23C is a schematic view illustrating the state of the robot during "uphill travelling" as the travelling state.
Fig. 24A is a graph illustrating a shift of acceleration Az in the vertical direction, which is exerted on the robot according to the travelling state.
Fig. 24B is a graph illustrating a shift of acceleration Az' exerted on the robot according to the travelling state.
Fig. 25 is a flow chart illustrating details of idling control processing (S105 in Fig. 16).
Fig. 26A is a view illustrating the idling control processing.
Fig. 26B is a view illustrating the idling control processing.
Fig. 26C is a view illustrating the idling control processing.
Fig. 26D is a view illustrating the idling control processing.
Fig. 26E is a view illustrating the idling control processing.
Fig. 27 is a flow chart illustrating details of attitude direction control processing (S106 in Fig. 16).

### Description of Embodiment

### (Underlying Knowledge Forming Basis of Aspect of the Present Disclosure)

As described above, PTL 1 discloses a multi-legged walking robot with four legs, which includes an acceleration sensor and an angular velocity sensor. In PTL 1, using two threshold values (δ1, δ2), variances of outputs detected by the acceleration sensor and the angular velocity sensor are classified to three categories to determine whether the robot acts on the ground, the robot is lifted up, or the robot is lifted down (for example, page 9, lines 5 to 14).

In contrast to this, the Inventor examines a robot having a spherical housing and a set of drive wheels provided in contact with the inner circumferential face of the housing and configured to rotate the housing. A frame is provided inside the robot, and a display unit that displays at least a portion of the face of the robot is provided to the frame. The robot has no hands or legs because they may obstruct rotation.

During examination of the robot, the Inventor found that the position of the face of the travelling robot, that is, the attitude of the robot changed depending on the material for a floor surface on which the robot travels. For example, when the robot travels on a wood flooring floor having a low friction coefficient, the robot's face is oriented forward. Meanwhile, when the robot travels on a carpet having a high friction coefficient, the robot's face is oriented upward. Hence, the Inventor found that, even though the robot was moved by the same travel processing, the position of the robot's face, that is, the attitude of the robot varied depending on the material for the floor surface rather than internal processing of the robot.

Such problem is not mentioned in PTL 1, and seems to have never been addressed before.

To solve the problem, the Inventor devised following aspects of the invention.

A robot according to an aspect of the present disclosure is a robot including:
a spherical housing;
a frame disposed in the housing;
a display unit that is provided on the frame, and that displays at least a portion of a face of the robot;
a set of drive wheels that are provided on the frame, and that rotate and move the housing while being in contact with an inner circumferential face of the housing;
a weight drive mechanism that is provided on the frame, and that reciprocates a weight in a predetermined direction;
an angular velocity sensor that detects angular velocity about a crosswise direction that is perpendicular to a travelling direction of the housing; and
a control circuit that, if the control circuit determines, while the housing is being rotated and moved, that a rotational angle of the housing when viewed from front in the travelling direction changes upward beyond a predetermined angle based on a change in the angular velocity about the crosswise direction, moves the weight frontward in the travelling direction of the housing by a distance corresponding to the rotational angle.

While the housing is being rotated and moved, when it is determined that, based on a change in the angular velocity about the crosswise direction, the rotational angle of the housing when viewed from the front in the travelling direction changes upward beyond a predetermined angle, it can be assumed that the position of the display unit is moved upward as the movement of the housing in the travelling direction when viewed in the travelling direction is restricted by friction between the housing and the floor surface.

In the aspect, in such case, the weight is moved forward in the travelling direction of the housing by a distance corresponding to the rotational angle.

Thereby, even when the movement of the housing in the travelling direction is restricted by friction between the housing and the floor surface, the display unit oriented upward due to the restriction can be turned downward.

As a result, the position of the robot's face, that is, the attitude of the robot can be prevented from unnaturally changing due to the material for the floor surface rather than internal processing of the robot, irrespective of the same travelling processing.

### (Embodiment)

### (Overall configuration)

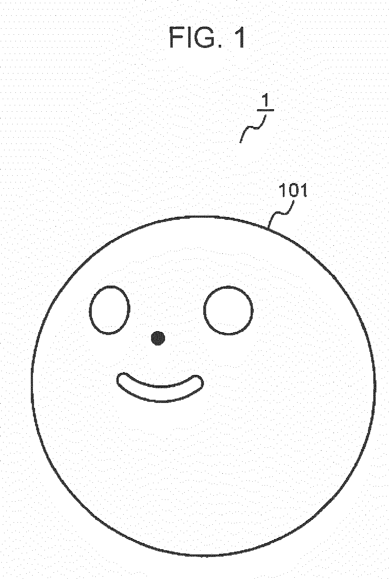

Fig. 1 is a perspective view illustrating the external appearance of a robot 1 according to an embodiment of the present disclosure. As illustrated in Fig. 1, the robot 1 includes a spherical housing 101. The housing 101 is formed of a transparent or translucent member, for example.

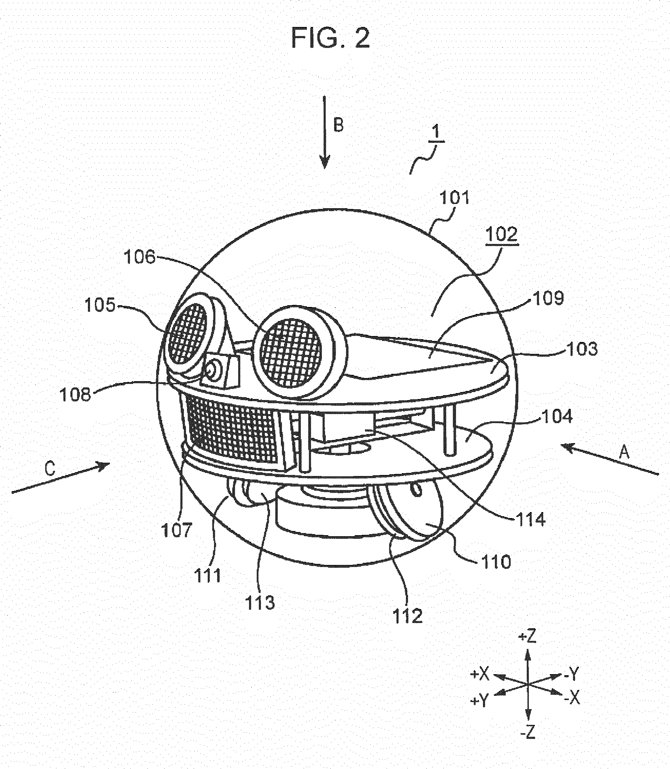

Fig. 2 is a perspective view illustrating the inside of the robot 1 according to the embodiment of the present disclosure.

In Fig. 2, a frame 102 is disposed in the housing 101. The frame 102 has a first rotating plate 103 and a second rotating plate 104. The first rotating plate 103 is located above the second rotating plate 104. The first rotating plate 103 and the second rotating plate 104 correspond to an example of a base.

As illustrated in Fig. 2, a first display unit 105 and a second display unit 106 are provided on the upper face of the first rotating plate 103. A third display unit 107 is provided on the upper face of the second rotating plate 104. For example, the first display unit 105, the second display unit 106, and the third display unit 107 each are configured of a plurality of light emitting diodes. The first display unit 105, the second display unit 106, and the third display unit 107 can display information of facial expressions of the robot. Specifically, the first display unit 105, the second display unit 106, and the third display unit 107 individually control lighting of the plurality of light emitting diodes to display a portion of the face of the robot 1 such as an eye and a mouth as illustrated in Fig. 1. In the example illustrated in Fig. 1, the first display unit 105 displays an image of the left eye, the second display unit 106 displays an image of the right eye, and the third display unit 107 displays an image of the mouth. The images of the left eye, the right eye, and the mouth penetrate the main housing 101 made of a transparent or translucent member, and are emitted to the outside.

As illustrated in Fig. 2, a camera 108 is provided on the upper face of the first rotating plate 103. The camera 108 acquires an image of environment around the robot 1. As illustrated in Fig. 1, the camera 108 constitutes a portion of the face of the robot 1, such as a nose. Thus, an optical axis of the camera 108 is oriented to the front of the robot 1. Therefore, the camera 108 can take an image of an object to be recognized presented to the front of the robot.

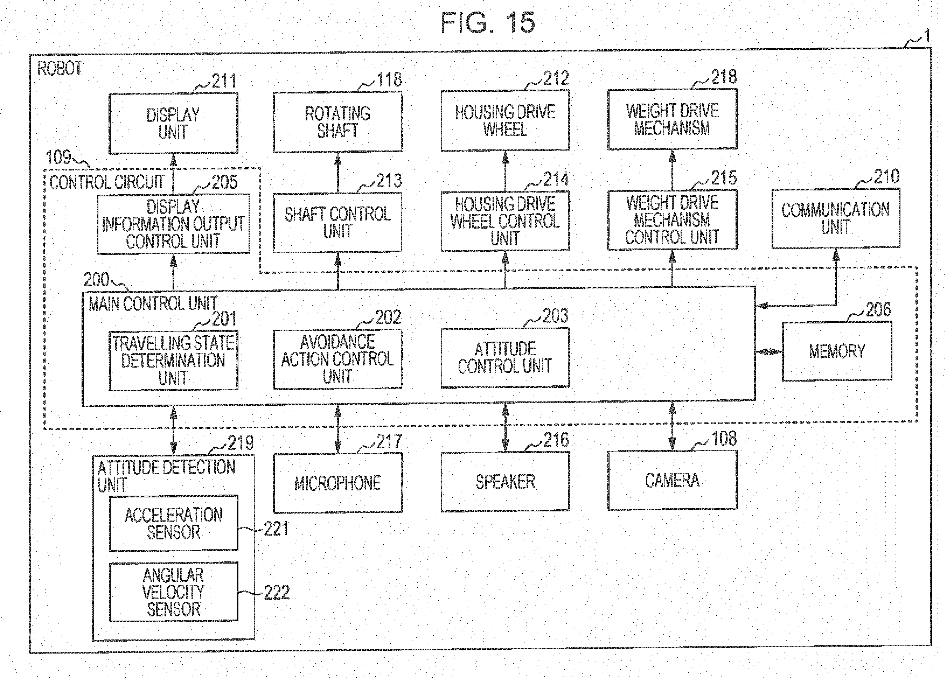

As illustrated in Fig. 2, a control circuit 109 is provided on the upper face of the first rotating plate 103. The control circuit 109 controls various operations of the robot 1. Details of the control circuit 109 will be described later with reference to Fig. 15.

A first drive wheel 110 and a second drive wheel 111 each are provided on the lower face of the second rotating plate 104, and are in contact with the inner circumferential face of the housing 101. The first drive wheel 110 has a first motor 112 that drives the first drive wheel 110. Similarly, the second drive wheel 111 has a second motor 113 that drives the second drive wheel 111. That is, the first drive wheel 110 and the second drive wheel 111 are driven by the respective independent motors. Details of the operation of the robot 1 driven by the first drive wheel 110 and the second drive wheel 111 will be described later. The first drive wheel 110 and the second drive wheel 111 constitute a pair of drive wheels.

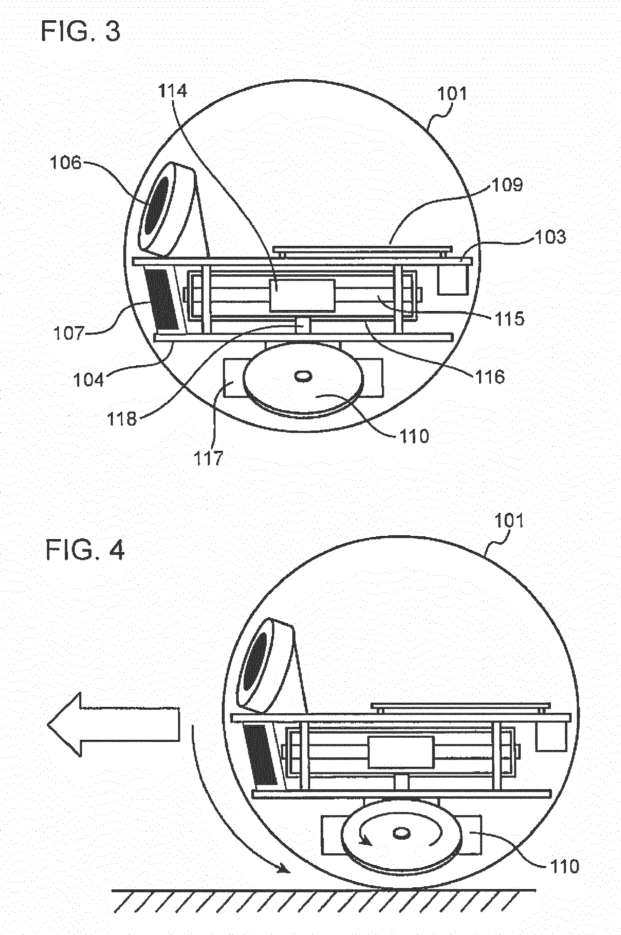

Fig. 3 is a side view illustrating the inside of the robot 1 according to the embodiment of the present disclosure when viewed from A in Fig. 2. In Fig. 3, a counterweight 114 (an example of a weight) is provided between the first rotating plate 103 and the second rotating plate 104. The counterweight 114 is located somewhat below the center of the housing 101. Accordingly, the center of gravity of the robot 1 is located below the center of the housing 101. This can stabilize the operation of the robot 1. Viewing from A means that the robot 1 is viewed from right toward left.

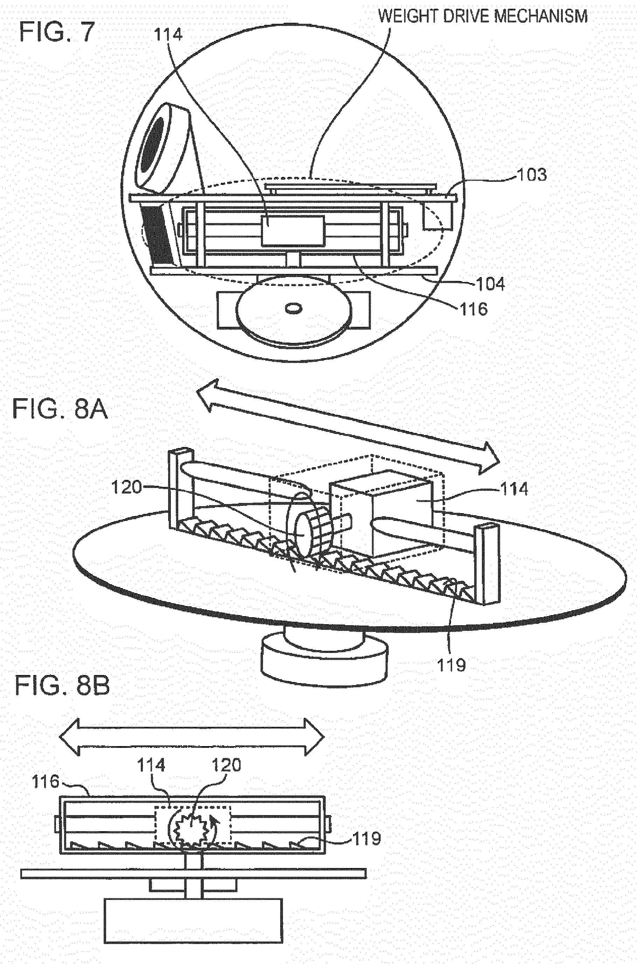

As illustrated in Fig. 3, to drive the counterweight 114, the robot 1 includes a guide shaft 115 that specifies the moving direction of the counterweight 114, a swing arm 116 that specifies the position of the rotating direction of the counterweight 114, a rotational motor 117 that rotates the swing arm 116, a rotating shaft 118 that connects the swing arm 116 to the rotational motor 117, a belt 119 used to drive the counterweight 114 (Figs. 8A and 8B), a motor pulley 120 that is in contact with the belt 119 (Figs. 8A and 8B), and a weight drive motor not illustrated that rotates the motor pulley 120. In this embodiment, the drive motor is built in the counterweight 114. Details of the operation of the robot 1 driven by the counterweight 114 will be described later.

The rotating shaft 118 extends perpendicular to a drive axis of the first drive wheel 110 and the second drive wheel 111. The rotating shaft 118 corresponds to an example of a shaft provided on the frame 102. When viewed from front, the first drive wheel 110 and the second drive wheel 111 get gradually away from each other toward the ground. In this case, the drive axis of the first drive wheel 110 and the second drive wheel 111 is, for example, a virtual axis connecting the centers of the first drive wheel 110 and the second drive wheel 111 to each other. When the first drive wheel 110 and the second drive wheel 111 are provided in parallel to each other when viewed from front, the actual drive axis becomes the drive axis of the first drive wheel 110 and the second drive wheel 111.

The robot 1 further includes a power source not illustrated and a microphone 217 (Fig. 15). The robot 1 is charged by a charger not illustrated. The microphone 217 acquires sound of environment around the robot 1.

Next, the operation of the robot 1 using the first drive wheel 110 and the second drive wheel 111 will be described with reference to Figs. 4 to 6.

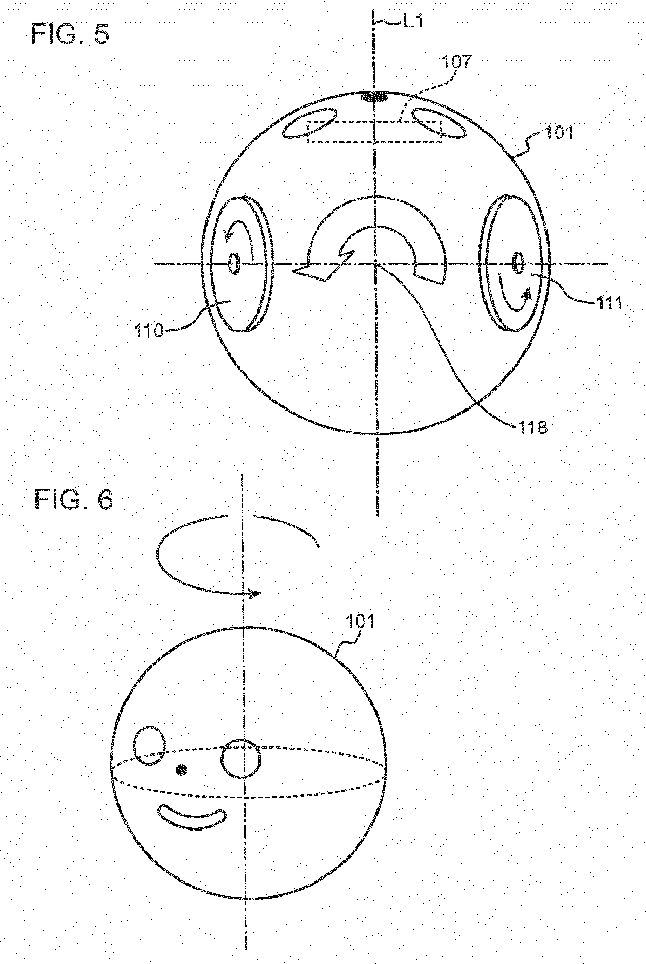

Fig. 4 is a side view illustrating linear movement of the robot 1 according to the embodiment of the present disclosure when viewed from A in Fig. 2. Fig. 5 is a plan view illustrating the rotation of the robot 1 according to the embodiment of the present disclosure when viewed from B in Fig. 2. Fig. 6 is a perspective view illustrating the rotation of the robot 1 according to the embodiment of the present disclosure. Looking from B means that the robot is viewed from above.

As illustrated in Fig. 4, when the first drive wheel 110 and the second drive wheel 111 are rotated forward, the housing 101 rotates forward due to the motive power. Thereby, the robot 1 moves forward. Conversely, when the first drive wheel 110 and the second drive wheel 111 are rotated rearward, the robot 1 moves rearward.

As illustrated in Figs. 5 and 6, when the first drive wheel 110 and the second drive wheel 111 are rotated in opposite directions, the housing 101 rotates about a vertical axis passing through the housing due to the motive power. That is, the robot 1 rotates clockwise or counterclockwise at the spot. In this manner, the robot 1 moves forward, moves rearward, or rotates.

Next, the basic operation of the robot 1 using the counterweight 114 will be described with reference to Figs. 7 to 9C.

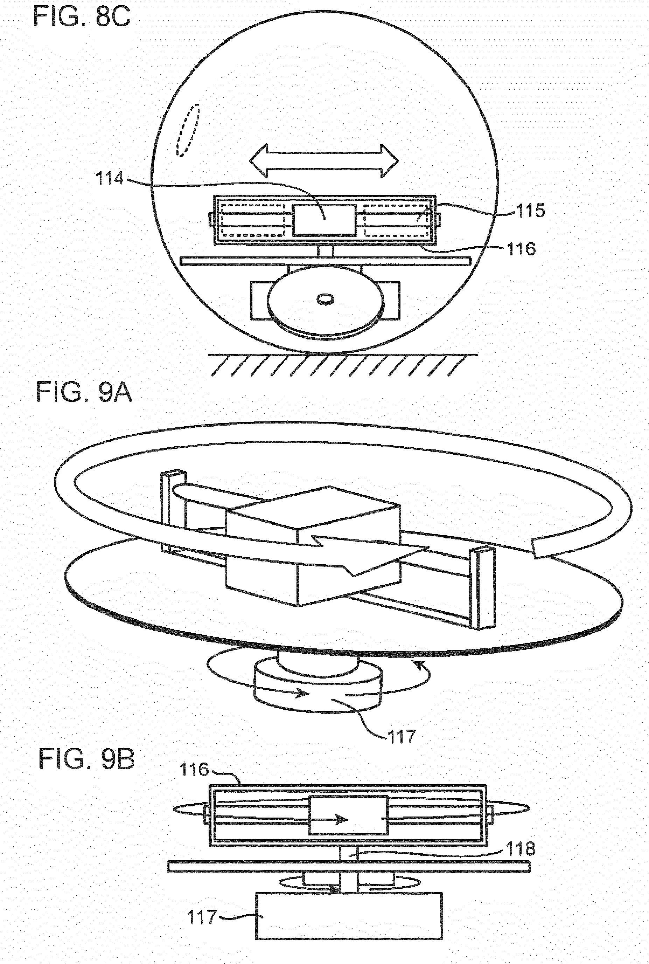

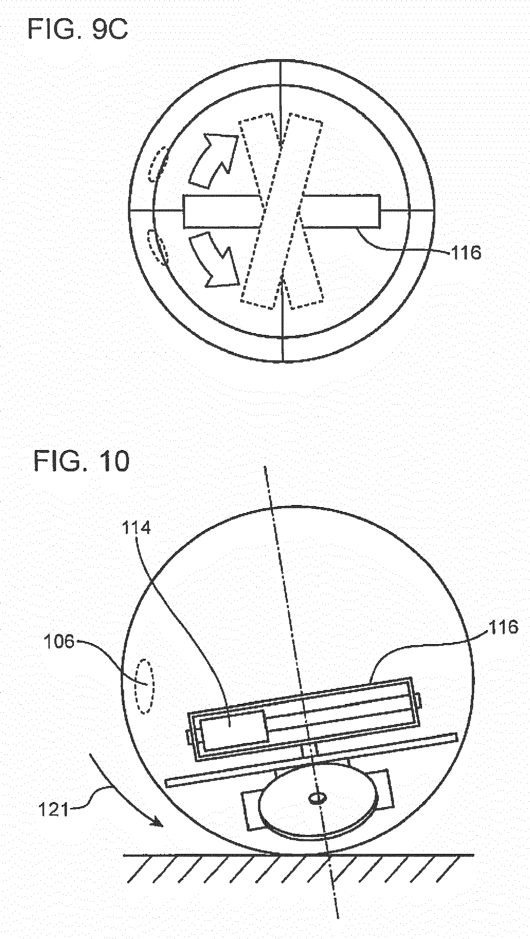

Fig. 7 is a view illustrating the weight drive mechanism in the side view of Fig. 3. Fig. 8A is a perspective view illustrating the operation of the drive mechanism for the counterweight 114 to drive the counterweight 114 in a predetermined linear direction. Fig. 8B is a side view illustrating the operation of the drive mechanism for the counterweight 114 to drive the counterweight 114 in a predetermined linear direction. Fig. 8C is a side view illustrating the state where the counterweight 114 reciprocates in a predetermined linear direction in the side view of Fig. 3. Fig. 9A is a perspective view illustrating the operation of the drive mechanism for the counterweight 114 to rotate the swing arm 116. Fig. 9B is a side view illustrating the operation of the weight drive mechanism to rotate the swing arm 116. Fig. 9C is a plan view illustrating the state where the swing arm 116 of the robot 1 according to the embodiment of the present disclosure rotates when viewed from B in Fig. 2.

As illustrated in Fig. 7, the center of the swing arm 116 is a default position of the counterweight 114. When the counterweight 114 is located at the center of the swing arm 116, the first rotating plate 103 and the second rotating plate 104 become substantially parallel to a floor surface, to form the face of the robot 1, for example, eyes, a nose, and mouth are oriented in a default direction.

As illustrated in Figs. 8A and 8B, the weight drive motor not illustrated built in the counterweight 114 rotates the motor pulley 120 coupled to the weight drive motor. The rotated motor pulley 120 rolls on the belt 119, such that the counterweight 114 moves in the swing arm 116. The counterweight 114 reciprocates in the linear direction in the swing arm 116 by changing the rotating direction of the motor pulley 120, that is, the driving direction of the weight drive motor.

As illustrated in Fig. 8C, the counterweight 114 reciprocates in the swing arm 116 along the guide shaft 115 in the linear direction.

As illustrated in Figs. 9A and 9B, the rotational motor 117 rotates the rotating shaft 118 to rotate the swing arm 116 connected to the rotating shaft 118 (Fig. 3).

As illustrated in Fig. 9C, the swing arm 116 can be rotated clockwise and counterclockwise.

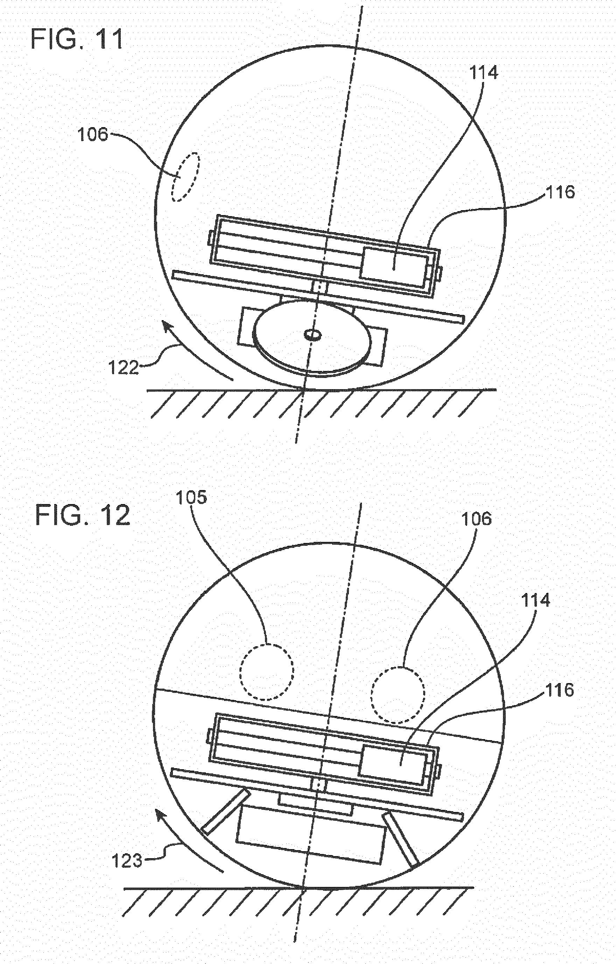

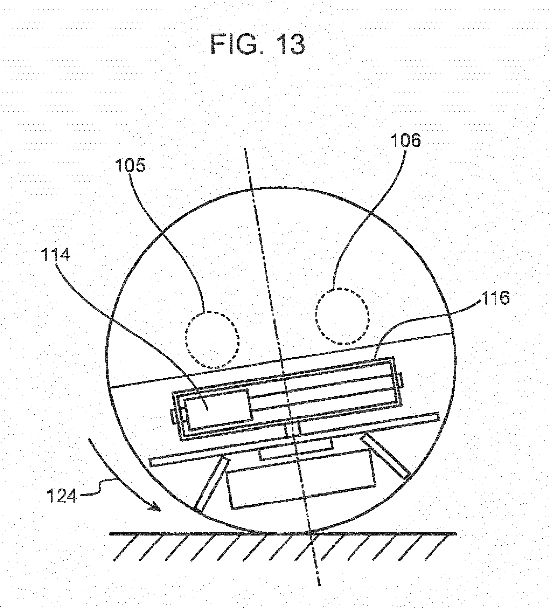

Details of the operation of the robot 1 using the counterweight 114 will be described with reference to Figs. 10 to 13. Fig. 10 is a side view illustrating the attitude of the robot 1 in which the counterweight 114 is located to the front when viewed from A in Fig. 2. Fig. 11 is a side view illustrating the attitude of the robot 1 in which the counterweight 114 is located to the rear when viewed from A in Fig. 2. Fig. 12 is a front view illustrating the attitude of the robot 1 in which the counterweight 114 is located to the right when viewed from C in Fig. 2. Fig. 13 is a front view illustrating the attitude of the robot 1 in which the counterweight 114 is located to the left when viewed from C in Fig. 2. Looking from C means that the robot 1 is viewed from the front.

As illustrated in Fig. 10, in the state where the swing arm 116 is perpendicular to the front of the robot 1, when the counterweight 114 is moved from the default position toward one end (left end in Fig. 10) of the swing arm 116, that is, the front, robot 1 leans to the front as represented by an arrow 121. As illustrated in Fig. 11, in the state where the swing arm 116 is perpendicular to the front of the robot 1, when the counterweight 114 is moved from the default position toward the other end (right end in Fig. 11) of the swing arm 116, that is, the front, the robot 1 leans to the rear as represented by an arrow 122. Therefore, in the state where the swing arm 116 is perpendicular to the front of the robot 1, when the counterweight 114 reciprocates from one end to the other end of the swing arm 116, the robot 1 alternately tilts forward and rearward as represented by the arrow 121 and the arrow 122, respectively. That is, the robot 1 rotates with a predetermined angle in the vertical direction.

As described above, the first display unit 105, the second display unit 106, and the third display unit 107 express a portion of the face of the robot 1, such as eyes and a mouth. For example, the robot 1 can be alternately tilted forward and rearward using the counterweight 114, as if the robot 1 is short of breath or sleepy. By performing this control when remaining power of the power source reaches a predetermined value or less, the robot 1 can notify the user that remaining power of the power source is small, without displaying information on the remaining power, which is unrelated to the face, on the first display unit 105, the second display unit 106, and the third display unit 107.

As illustrated in Fig. 12, in the state where the swing arm 116 is parallel to the front of the robot 1, when the counterweight 114 is moved from the default position toward one end (right end in Fig. 12) of the swing arm 116, that is, the right, robot 1 leans to the right as represented by an arrow 123. As illustrated in Fig. 13, in the state where the swing arm 116 is parallel to the front of the robot 1, when the counterweight 114 is moved from the default position toward the other end (left end in Fig. 13) of the swing arm 116, that is, the left, the robot 1 leans to the left as represented by an arrow 124. Therefore, in the state where the swing arm 116 is parallel to the front of the robot 1, when the counterweight 114 reciprocates from one end to the other end of the swing arm 116, the robot 1 alternately tilts right and left as represented by the arrow 123 and the arrow 124, respectively. That is, the robot 1 swings side-to-side with a predetermined angle.

As described above, the first display unit 105, the second display unit 106, and the third display unit 107 express a portion of the face of the robot 1, such as eyes and a mouth. For example, the robot 1 can be alternately tilted rightward and leftward using the counterweight 114, as if the robot 1 feels good or is thinking deeply.

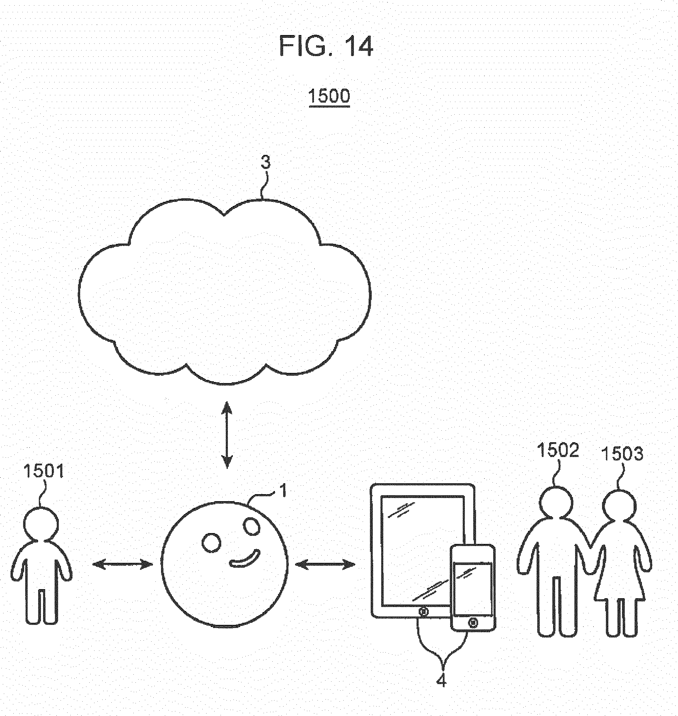

Fig. 14 is a view illustrating an example of overall configuration of a robot system 1500 using the robot 1 according to the embodiment of the present disclosure. The robot system 1500 includes a cloud server 3, a portable terminal 4, and the robot 1. The robot 1 is connected to the Internet via Wifi (registered trademark), and to the cloud server 3. The robot 1 is also connected to the portable terminal 4 via Wifi (registered trademark), for example. As an example, a user 1501 is a child, and users 1502, 1503 are parents of the child.

For example, an application cooperating with the robot 1 is installed on the portable terminal 4. The portable terminal 4 can issue various instructions to the robot 1 using the application, and display the image recognition result described referring to Fig. 14.

When receiving a request to read a picture book to the child from the portable terminal 4, the robot 1 reads the picture book aloud to the child. When accepting a question during reading of the picture book, the robot 1 transmits the question to the cloud server 3, receives an answer to the question from the cloud server 3, and makes the answer.

As described above, the user 1501 can treat the robot 1 like a pet, and learn language through communication with the robot 1.

Next, details of an internal circuit of the robot 1 according to the embodiment of the present disclosure will be described with reference to Fig. 15. Fig. 15 is a block diagram illustrating the robot 1 according to the embodiment of the present disclosure.

As illustrated in Fig. 15, the robot 1 includes the control circuit 109, a display unit 211, a shaft control unit 213, the rotating shaft 118, a housing drive wheel control unit 214, a housing drive wheel 212, a weight drive mechanism control unit 215, a weight drive mechanism 218, an attitude detection unit 219, the microphone 217, a speaker 216, the camera 108, and a communication unit 210.

The control circuit 109 is configured of a computer including a memory 206, a main control unit 200 configured of a processor such as a CPU, a display information output control unit 205, and a timer not illustrated that checks the time.

The memory 206 is configured of, for example, a nonvolatile rewritable storage device that stores a program for controlling the robot 1 and so on.

The main control unit 200 executes the control program for controlling the robot 1, which is stored in the memory 206. Thereby, the main control unit 200 functions as a travelling state determination unit 201, an avoidance action control unit 202, and an attitude control unit 203.

The attitude detection unit 219 includes an acceleration sensor 221 and an angular velocity sensor 222.

For example, the acceleration sensor 221 is configured of a three-axis acceleration sensor attached to the first rotating plate 103. As illustrated in Fig. 2, the acceleration sensor 221 detects an acceleration (an example of a first acceleration) in a vertical direction (Z direction), an acceleration in a crosswise direction (X direction), and an acceleration (an example of second acceleration) in a front-rear direction (Y direction). The vertical direction is orthogonal to the principal plane of the first rotating plate 103. The crosswise direction is a right-left direction when the robot 1 is viewed from the front. The front-rear direction is orthogonal to the vertical direction and the crosswise direction. Accordingly, the front-rear direction is parallel to the principal plane of the first rotating plate 103.

The acceleration sensor 221 outputs the detected acceleration in the three directions to the main control unit 200. The acceleration sensor 221 and the angular velocity sensor 222 may be attached to the lower face of the first rotating plate 103, or the upper or lower face of the second rotating plate 104, rather than the upper face of the first rotating plate 103.

The angular velocity sensor 222 detects the angular velocity of the robot 1 about the crosswise direction, that is, the angular velocity of the robot 1 in a pitch direction. Further, the angular velocity sensor 222 detects the angular velocity of the robot 1 about the vertical direction, that is, the angular velocity of the robot 1 in a yaw direction. Further, the angular velocity sensor 222 detects the angular velocity of the robot 1 about the front-rear direction, that is, the angular velocity of the robot 1 in a roll direction.

The microphone 217 is provided on the frame 102, converts sound into an electric signal, and outputs the electric signal to the main control unit 200. For example, the microphone 217 may be attached to the upper face of the first rotating plate 103, or may be attached to the upper face of the second rotating plate 104. The main control unit 200 recognizes whether or not the user's voice is present in the sound acquired by the microphone 217, and stores voice recognition results in the memory 206 to manage the voice recognition results. The main control unit 200 compares voice recognition data stored in the memory 206 with the acquired sound, and recognizes speech contents and the user who spoke.

The speaker 216 is provided on the frame 102 such that an output face is oriented to the front, and converts the electric signal of sound into physical vibrations. The main control unit 200 outputs predetermined vice via the speaker 216 to enable the robot 1 to speak.

As described above with reference to Fig. 2, the camera 108 takes an image in front of the robot 1 (Y direction), and outputs the image (hereinafter referred to as taken image) to the main control unit 200. The main control unit 200 recognizes presence/absence, position, and size of the user's face from the taken image acquired by the camera 108, and stores face recognition results in the memory 206 to manage the face recognition results.

The main control unit 200 generates a command based on the voice recognition result and the face recognition result, and outputs the command to the display information output control unit 205, the shaft control unit 213, the housing drive wheel control unit 214, the weight drive mechanism control unit 215, and the communication unit 210.

According to the command from the main control unit 200, the display information output control unit 205 displays information on facial expression of the robot 1 on the display unit 211. The display unit 211 is configured of the first display unit 105, the second display unit 106, and the third display unit 107, which are described with reference to Fig. 2.

According to the command from the main control unit 200, the shaft control unit 213 rotates the rotating shaft 118 described with reference to Figs. 9A and 9B. The shaft control unit 213 is configured of the rotational motor 117 described with reference to Figs. 9A and 9B.

According to the command from the main control unit 200, the housing drive wheel control unit 214 operates the housing drive wheel 212 of the robot 1. The housing drive wheel control unit 214 is configured of the first motor 112 and the second motor 113, which are described with reference to Fig. 2. The housing drive wheel 212 is configured of the first drive wheel 110 and the second drive wheel 111, which are described with reference to Fig. 2. The housing drive wheel 212 corresponds to an example of a set of drive wheels.

According to the command from the main control unit 200, the weight drive mechanism control unit 215 operates the weight drive mechanism 218 of the robot 1. The weight drive mechanism control unit 215 is configured of a weight drive motor not illustrated built in the counterweight 114. The weight drive mechanism 218 is configured of the guide shaft 115, the swing arm 116, the rotational motor 117, the belt 119, the motor pulley 120, and the weight drive motor not illustrated, which are described with reference to Figs. 3, 8A, and 8B.

The communication unit 210 is configured of a communication device capable of connecting the robot 1 to the cloud server 3 (Fig. 14). Examples of the communication unit 210 include, but are not limited to, a wireless LAN communication device such as Wifi (registered trademark). According to a command from the main control unit 200, the communication unit 210 communicates with the cloud server 3.

### (Main routine)

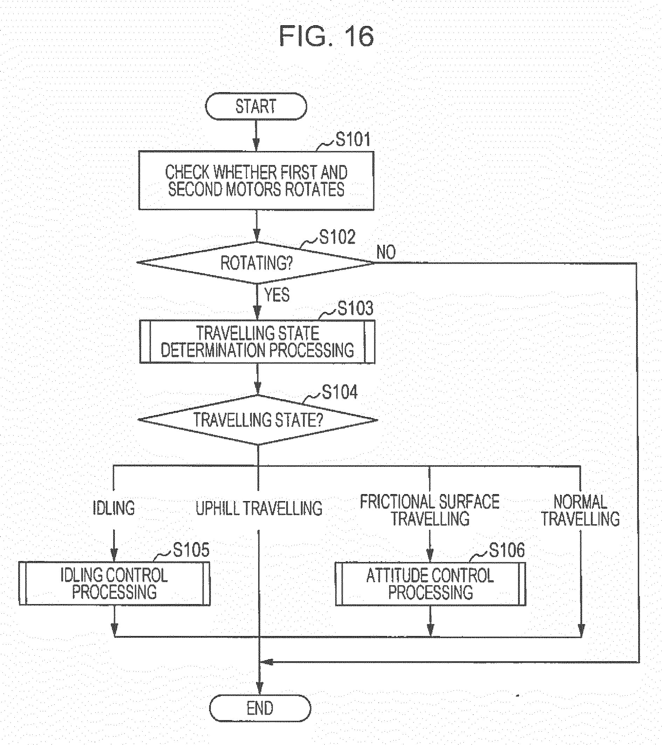

Fig. 16 is a flow chart illustrating an example of a main routine of the robot 1 according to the embodiment of the present disclosure.

The flow chart in Fig. 16 is periodically performed at sampling interval Δt. First, the main control unit 200 checks whether or not the first motor 112 and the second motor 113 rotate (S101). Here, for example, the main control unit 200 differentiates rotational angles of the first motor 112 and the second motor 113, which are detected by respective encoders of the first motor 112 and the second motor 113 to find rotational rates of the first motor 112 and the second motor 113. The main control unit 200 may determine that the robot 1 is "not rotating", that is, "suspended" when both of the found rotational rates of the first motor 112 and the second motor 113 are substantially 0, and determine that the robot 1 is "rotating", when at least one of the rotational rates of the first motor 112 and the second motor 113 is not substantially 0.

Next, if it is determined that the robot is "rotating" in S101 (YES in S102), the main control unit 200 proceeds the processing to S103. Meanwhile, if it is determined that the robot is "not rotating" in S101 (NO in S102), the main control unit 200 finishes the processing.

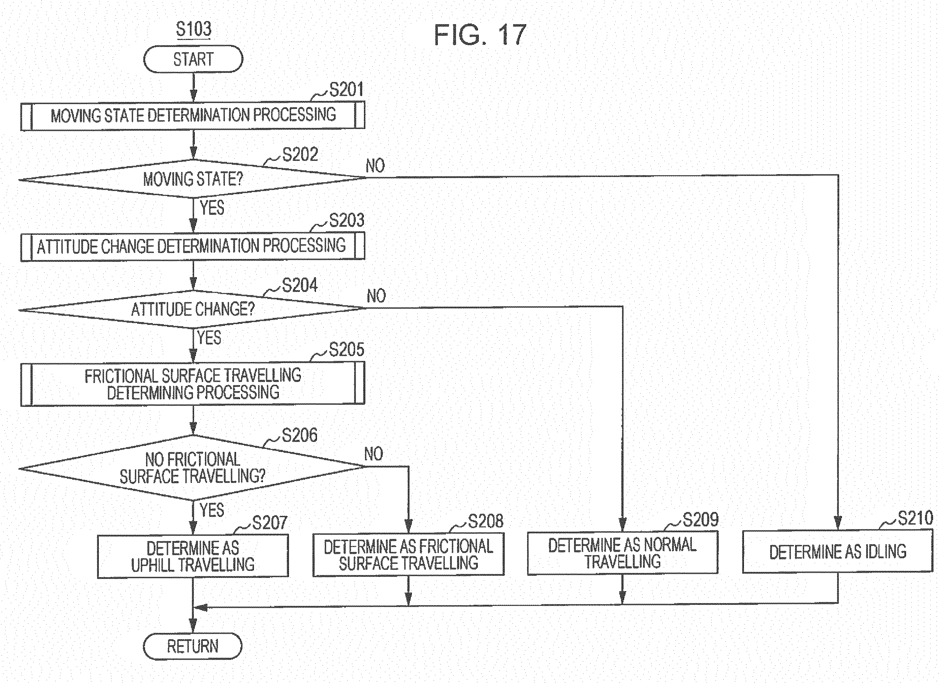

In S103, the travelling state determination unit 201 executes travelling state determination processing. Details of the travelling state determination processing will be described later with reference to Fig. 17.

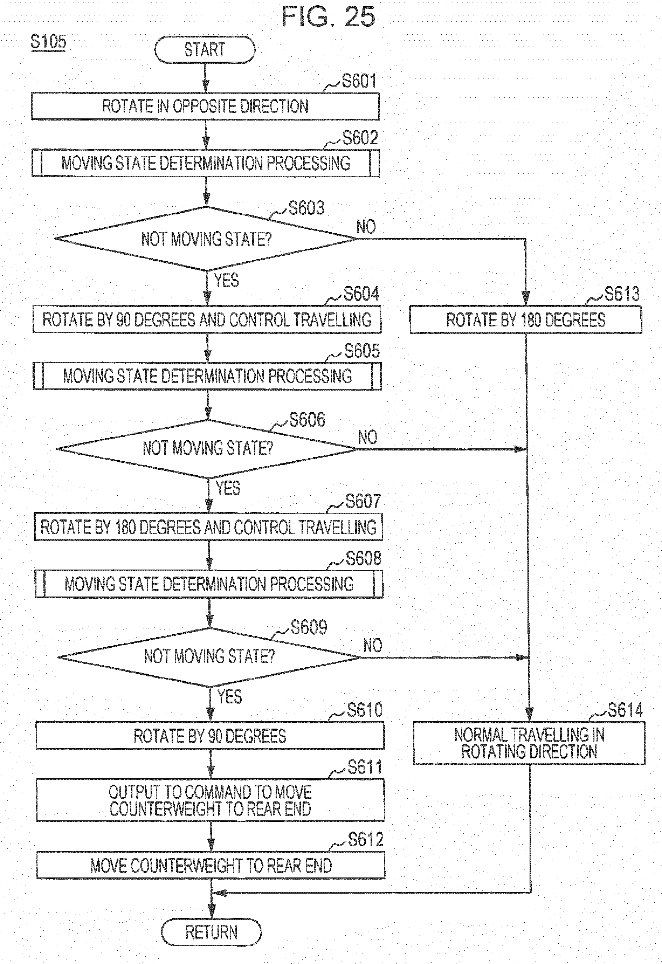

In S104, the processing branches depending on the result of the travelling state determination processing (S103). That is, if the result of the travelling state determination processing indicates "idling" ("idling" in S104), the avoidance action control unit 202 executes idling control processing (S105), and finishes the processing. Details of the idling control processing will be described later with reference to Fig. 25. If the result of the travelling state determination processing indicates "uphill travelling" ("uphill travelling" in S104), the main control unit 200 finishes the processing.

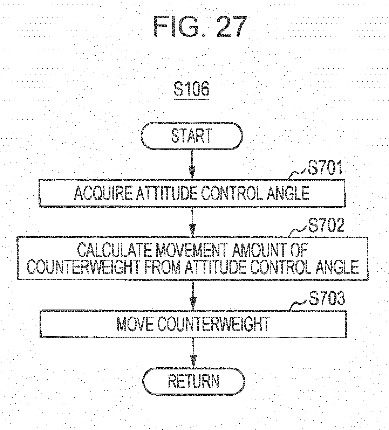

If the result of the travelling state determination processing indicates "frictional surface travelling" (frictional surface travelling" in S104), the attitude control unit 203 executes attitude control processing (S106), and finishes the processing. Details of the attitude control processing will be described later with reference to Fig. 27.

The travelling state refers to the travelling state of the robot 1 while the first motor 112 and the second motor 113 are rotating, and includes "idling", "uphill travelling", "frictional surface travelling", and "normal travelling".

Given that the friction coefficient of the wood flooring floor is a typical friction coefficient, the "frictional surface travelling" refers to the state where the robot 1 is travelling on the floor surface having a friction coefficient higher than the typical friction coefficient by a certain value (for example, carpet). In this embodiment, the robot 1 is designed such that the Y direction becomes parallel to the travelling direction in Fig. 2 when the robot 1 is travelling on the wood flooring floor having the typical friction coefficient at a predetermined target rate. Given that the position of the first to third display units 105 to 107 at this time is a reference position of the face of the robot 1, during the frictional surface travelling, the angle that forms the Y direction with the travelling direction due to friction increases, turning the face of the robot 1 above the reference position. In the attitude control processing (S106), the face orientation is returned to the reference position.

If the result of the travelling state determination processing is "normal travelling" ("normal travelling" in S104), the main control unit 200 finishes processing. The "normal travelling" refers to the state where the robot 1 is travelling on a flat floor surface having the typical friction coefficient. The "uphill travelling" refers to the state where the robot 1 is going uphill. The "idling" refers to the state where the first motor 112 and the second motor 113 are rotating, but the robot 1 is static.

### (Travelling state determination processing)

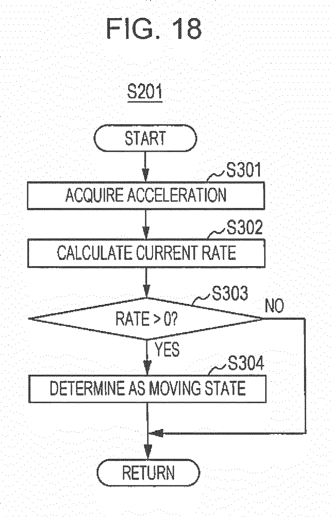

Fig. 17 is a flow chart illustrating details of the travelling state determination processing (S103 in Fig. 16). First, the travelling state determination unit 201 executes moving state determination processing (S201). Details of the moving state determination processing will be described later with reference to Fig. 18.

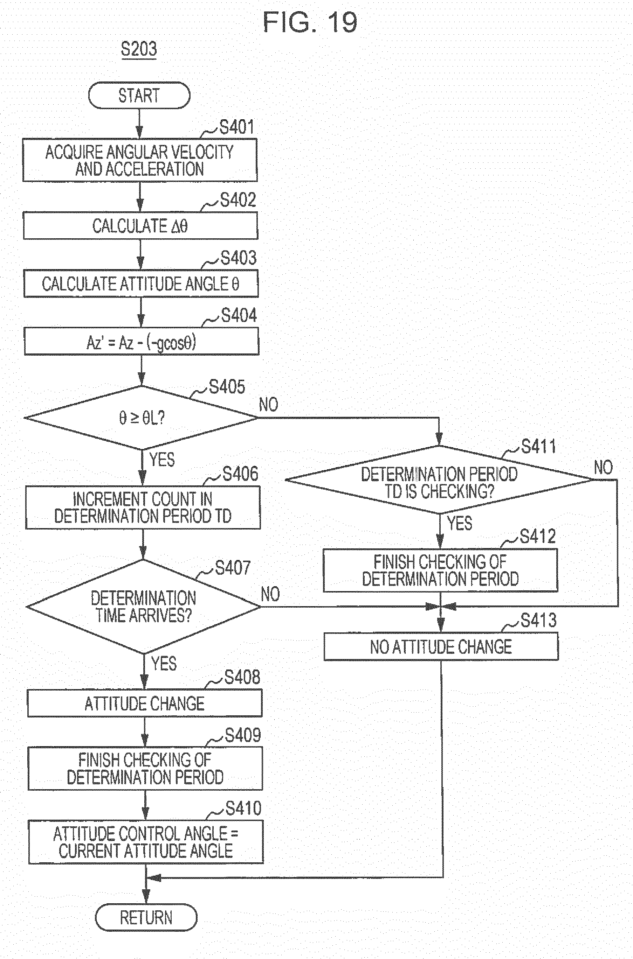

If the result of the moving state determination processing is "moving state" (YES in S202), the travelling state determination unit 201 executes attitude change determination processing (S203). Details of the attitude change determination processing will be described later with reference to Fig. 19. Meanwhile, if the result of the moving state determination processing does not indicate "moving state" (NO in S202), the travelling state determination unit 201 determines the travelling state of the robot 1 as "idling" (S210), and the processing returns to S104 in Fig. 16.

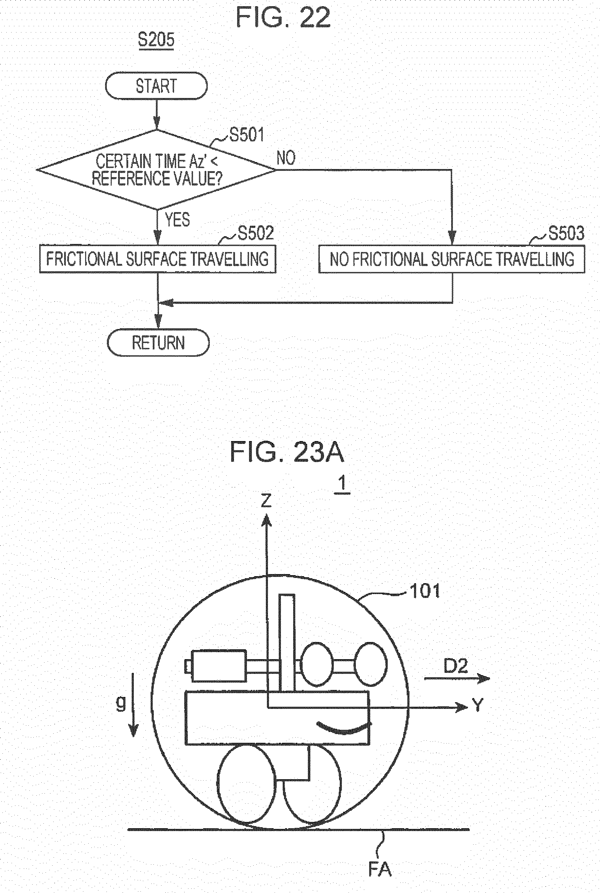

If the result of the attitude change determination processing indicates "attitude change" (YES in S204), the travelling state determination unit 201 executes frictional surface travelling determination processing (S205). Details of the frictional surface travelling determination processing will be described later with reference to Fig. 22. Meanwhile, if the result of the attitude change determination processing indicates "no attitude change" (NO in S204), the travelling state determination unit 201 determines the travelling state of the robot 1 as "normal travelling" (S209), and the processing returns to S104 in Fig. 16.

If the result of the frictional surface travelling determination processing does not indicate "frictional surface travelling" (YES in S206), the travelling state determination unit 201 determines the travelling state as "uphill travelling" (S207), and the processing returns to S104 in Fig. 16.

Meanwhile, if the result of the frictional surface travelling determination processing indicates "frictional surface travelling" (NO in S206), the travelling state determination unit 201 determines the travelling state of the robot 1 as "frictional surface travelling" (S208), and the processing returns to S104 in Fig. 16.

### (Moving state determination processing)

Fig. 18 is a flow chart illustrating details of moving state determination processing (S201 in Fig. 17). First, the travelling state determination unit 201 acquires acceleration A from the acceleration sensor 221 (S301).

Next, the travelling state determination unit 201 differentiates acceleration Ay in the Y direction among the acceleration A acquired in S301 to calculate current rate Vy of the robot 1 in the Y direction (S302).

Next, if the current rate Vy of the robot 1 in the Y direction is larger than 0 (YES in S303), the travelling state determination unit 201 determines that the robot 1 is "moving state" (S304). The "moving state" refers to the state where the first motor 112 and the second motor 113 do not idle and the robot 1 is actually travelling. Specifically, "moving state" includes the above-mentioned "uphill travelling", "frictional surface travelling", and "normal travelling". Meanwhile, if the current rate Vy of the robot 1 in the Y direction is 0 (NO in S303), the travelling state determination unit 201 returns the processing to S202 in Fig. 17. In the case if NO in S303, NO is selected in S202 in Fig. 17, and the travelling state of the robot 1 is determined as "idling" (S210).

### (Attitude determination processing)

Fig. 19 is a flow chart illustrating details of attitude determination processing (S203 in Fig. 17). First, the travelling state determination unit 201 acquires the acceleration A from the acceleration sensor 221, and angular velocity ω from the angular velocity sensor 222 (S401).

Next, the travelling state determination unit 201 calculates an amount of change Δθ of attitude angle θ that is the angle of the robot 1 in the pitch direction from angular velocity ωp in the pitch direction among the angular velocity ω acquired in S401 (S402). In this case, the travelling state determination unit 201 may calculate an amount of change Δθ (= ωp × Δt) by multiplying the sampling interval Δt by the angular velocity ωp acquired in S401. That is, the amount of change Δθ refers to an amount of change in attitude angle θ at the sampling interval Δt.

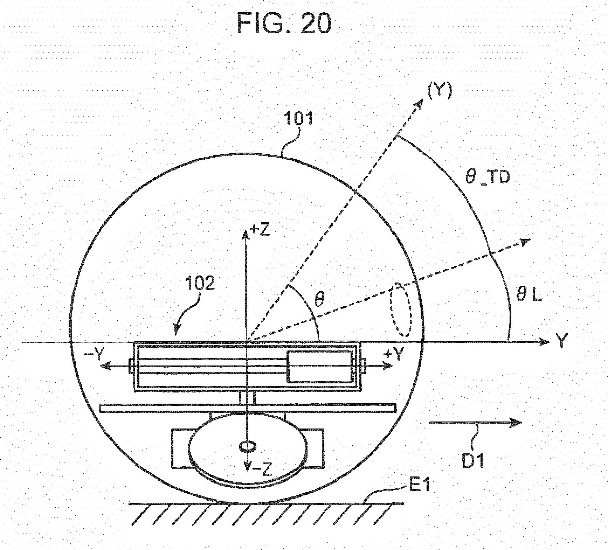

Fig. 20 is a view illustrating the attitude angle θ of the robot 1. Fig. 20 illustrates the state having the attitude angle θ of 0. As illustrated in Fig. 20, the attitude angle θ refers to the angle that forms the Y direction with a reference direction D1. The reference direction D1 is a direction acquired by projecting the travelling direction of the robot 1 onto a horizontal surface E1.

Next, the travelling state determination unit 201 calculates the current attitude angle θ (S403). In this case, given that the current attitude angle θ is the attitude angle θ(t), and the attitude angle θ calculated at the previous sampling point is the attitude angle θ(t - Δt), the travelling state determination unit 201 may calculate the attitude angle θ according to the equation: θ (t) = θ (t - Δt) + Δθ.

Next, the travelling state determination unit 201 excludes a gravitational acceleration component (g × cosθ) from the acceleration Az acquired in S401 to calculate acceleration Az' (= Az- (-g × cosθ)) (S404). Values of the acceleration Az' calculated in S404 for at least a certain period are stored in the memory to be used in below-mentioned frictional surface travelling determination processing (Fig. 22). The acceleration Az' is an example of a second value. The symbol "-" added to g × cosθ means that upward is represented by plus, and downward is represented by minus.

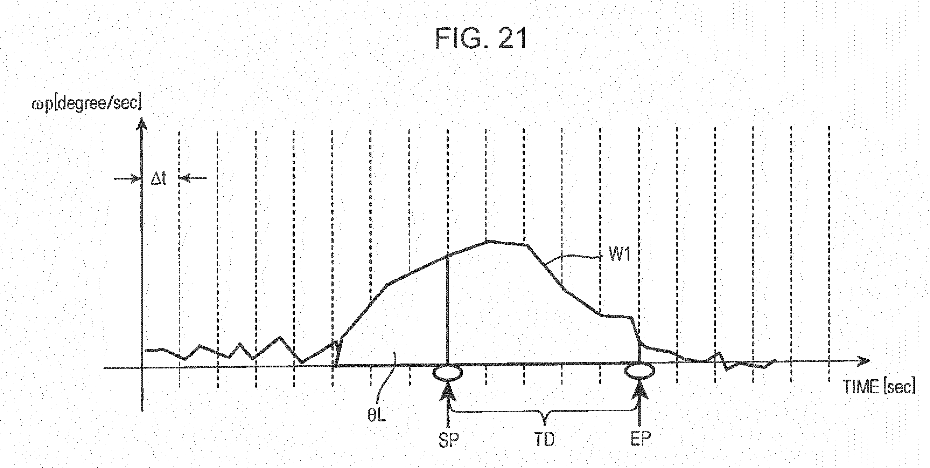

Next, the travelling state determination unit 201 determines whether or not the attitude angle θ calculated in S403 reaches a predetermined lower limit angle θL (S405). Fig. 21 is a graph illustrating the attitude determination processing, a vertical axis represents the angular velocity ωp (degree/sec) in the pitch direction, and a horizontal axis represents time. In Fig. 21, dotted lines drawn in parallel to the vertical axis represent sampling points. A waveform W1 indicates a shift of the angular velocity ωp with time. Since an area between the waveform W1 and the time axis represents an integrated value of the angular velocity ωp, the area refers to the attitude angle θ. The lower limit angle θL is the attitude angle θ that satisfies a condition for starting timekeeping of determination time TD.

If the attitude angle θ is the lower limit angle θL or more (YES in S405), the travelling state determination unit 201 increments a count for keeping the determination time TD (S406). Since the flow chart of Fig. 19 is performed every sampling interval Δt, the count is incremented every the sampling interval Δt. As illustrated in Figs. 20 and 21, in the attitude determination processing, when the attitude angle θ exceeds the lower limit angle θL, keeping of the determination time TD is started. This is due to that, during frictional surface travelling and uphill travelling of the robot 1, the attitude angle θ is assumed to keep the lower limit angle θL or more. Therefore, the lower limit angle θL adopts a minimum value of the attitude angle θ of the robot 1 assumed during frictional surface travelling or uphill travelling of the robot 1.

Meanwhile, if the attitude angle θ is less than the lower limit angle θL (NO in S405), the travelling state determination unit 201 proceeds the processing to S411.

In S407, if the count reaches determination time TD (YES in S407), the travelling state determination unit 201 determines the result of the attitude determination processing as "attitude change" (S408), and finishes keeping of the determination time TD (S409). In this case, the travelling state determination unit 201 may reset the count of the determination time TD to 0.

It is supposed that the robot 1 performs frictional surface travelling and uphill travelling while keeping a certain level of attitude angle θ. Thus, in the attitude change determination processing, if the condition that the attitude angle θ keeps the lower limit angle θL or more for the determination time TD is satisfied, the travelling state determination unit 201 determines that the attitude of the robot 1 has changed. This can prevent the travelling state determination unit 201 from wrongly determining that the robot 1 is conducting frictional surface travelling or uphill travelling due to a temporal change in the attitude angle θ caused, for example, when the robot 1 runs onto a garbage on the wood flooring floor.

Next, the travelling state determination unit 201 sets an attitude control angle θC to the current attitude angle θ (S410), and returns the processing to S204 in Fig. 17. In this case, referring to Fig. 20, the attitude control angle θC becomes the attitude angle θ of the robot 1 at an end time at an end point EP of the determination time TD (Fig. 21). That is, the attitude control angle θC becomes the lower limit angle θL + amount of change θ_TD of the attitude angle θ for the determination time TD. Accordingly, even when the attitude angle θ continues to increase after the end point EP, the attitude control angle θC is the attitude angle θ at the end point EP.

In S411, if the determination period TD is being checked (YES in S411), the travelling state determination unit 201 finishes checking of the determination period TD (S412), and proceeds the processing to S413, and if the determination period TD is not being checked (NO in S411), the and proceeds the processing to S413. In S412, as in S409, the travelling state determination unit 201 may reset the count of the determination time TD to 0.

In S413, the travelling state determination unit 201 determines the result of the attitude determination processing as "no attitude change", and returns the processing to S204 in Fig. 17.

When the robot 1 travels on a floor surface such as carpet having yarns of varied directions and lengths, the attitude angle θ may repeatedly fluctuate up and down around the lower limit angle θL. In this case, despite that the attitude angle θ is not continuously kept at the lower limit angle θL or more, the travelling state determination unit 201 may determine "attitude change" due to the accumulated value of the count. To present this, the processing in S411, S411 is provided. This can prevent the value in the count from being accumulated when the attitude angle θ repeatedly fluctuates up and down around the lower limit angle θL. As a result, when the attitude angle θ is not continuously kept at the lower limit angle θL or more, the travelling state determination unit 201 can be prevented from wrongly determining "attitude change".

The attitude determination processing will be summarized with reference to Fig. 21. The travelling state determination unit 201 acquires the angular velocity ωp at the sampling interval Δt, and adds up the acquired angular velocity ωp to monitor the current attitude angle θ. Then, when the attitude angle θ reaches the lower limit angle θL, the travelling state determination unit 201 determines a start point SP when keeping of the determination time TD is started arrives, and starts to keep the determination time TD. Then, if the attitude angle θ becomes less than the lower limit angle θL for the determination time TD, the travelling state determination unit 201 selects NO in S405 in Fig. 19 to determine the result as "no attitude change" (S411). Meanwhile, if the attitude angle θ keeps the lower limit angle θL or more by the end point EP in the determination time TD, the travelling state determination unit 201 determines the result as "attitude change" (S408 in Fig. 19).

### (Frictional surface travelling determination processing)

Fig. 22 is a flow chart illustrating details of frictional surface travelling determination processing (S205 in Fig. 17). First, the travelling state determination unit 201 determines whether or not the acceleration Az' (= Az + g × cosθ) calculated in S404 in Fig. 19 is continuously less than a reference value (an example of a first change width) for a certain time (S501), if the acceleration Az' is continuously less than the reference value (YES in S501), the travelling state determination unit 201 determines the result as "frictional surface travelling" (S502). Meanwhile, if the acceleration Az' is not continuously less than the reference value for the certain time (NO in S501), the travelling state determination unit 201 determines the result as "frictional surface travelling (S503). When the processing in Fig. 22 is finished, the processing returns to S206 in Fig. 17.

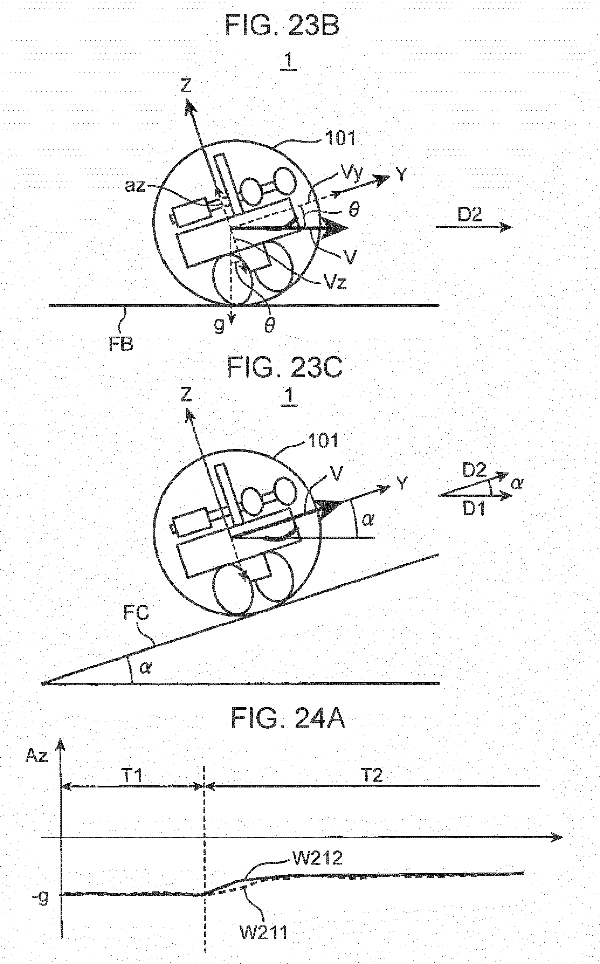

Fig. 23A is a schematic view illustrating the state of the robot 1 during "normal travelling". Fig. 23B is a schematic view illustrating the state of the robot 1 during "frictional surface travelling". Fig. 23C is a schematic view illustrating the state of the robot 1 during "uphill travelling".

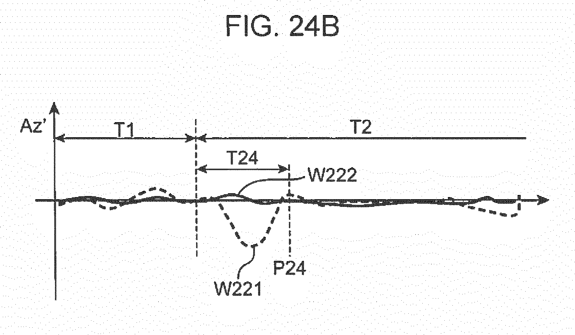

Fig. 24A is a graph illustrating a shift of the acceleration Az exerted on the robot 1 in the vertical direction with time according to the travelling state. Fig. 24B is a graph illustrating a shift of the acceleration Az' exerted on the robot 1 with time according to the travelling state. In Fig. 24A, a vertical axis represents the acceleration Az, and a horizontal axis represents time. In Fig. 24B, a vertical axis represents the acceleration Az', and a horizontal axis represents time. In Figs. 24A and 24B, waveforms W211, W221 represent accelerations Az, Az', respectively, exerted when the travelling state is switched from "normal travelling: time T1" to "frictional surface travelling: time T2", and waveforms W212, W222 represent accelerations Az, Az', respectively, exerted when the travelling state is switched from "normal travelling: time T1" to "uphill travelling: time T2".

Referring to Fig. 23A, during "normal travelling", the robot 1 travels on a flat floor face FA having the typical friction coefficient at a predetermined target rate. During normal travelling, since the robot 1 is designed such that the Y direction is parallel to the floor face FA, the Y direction becomes parallel to the travelling direction D2 of the robot 1. In this case, since a gravitational component (-g) is added to the robot 1 in the Z direction, as represented by time T1 in Fig. 24A, the acceleration Az both in the waveforms W211, W212 is -g. Accordingly, the acceleration Az' becomes 0 according to Az (= -g) - (-g). For this reason, as illustrated in Fig. 24B, in time T1, the acceleration Az' both in the waveforms W221, W222 keeps substantially 0. Pulsation of the waveforms in Figs. 24A and 24B is caused by vibrations of the floor and the like.

Referring to Fig. 23B, during frictional surface travelling, due to friction on a floor face FB, the robot 1 is oriented upward with the attitude angle θ with respect to the travelling direction D2 that is parallel to the floor face FB, and travels on the floor face FB at a rate V in the travelling direction D2. Accordingly, during frictional surface travelling, the robot 1 has rate Vy in the Y direction and rate Vz in the Z direction.

Immediately after the robot 1 enters to the floor face FB, the rate V decreases one by friction and so on, but the robot 1 is controlled to travel at a uniform rate and thus, the rate V returns to target rate soon. In a transient period during which the robot 1 enters to the floor face FB and the rate V returns to the target rate, acceleration az caused by a change in the rate Vz is added to the robot 1 in the Z direction.

In the transient period, since the attitude angle θ of the robot 1 increases from 0 degree to an angle corresponding to the friction coefficient of the floor face FB, the acceleration of -g × cosθ caused by gravity in addition to the acceleration az is added to the robot 1 in the Z direction. Thus, the acceleration Az becomes az - g × cosθ. Accordingly, the acceleration Az' becomes az (Az' = az - g × cosθ - (-g × cosθ)). In the transient period, since the rate Vz decreases and then, increases, the acceleration az changes in the - direction and then, changes in the + direction. Therefore, in the transient period of frictional surface travelling, as represented by the waveform W221 in Fig. 24B, the waveform of acceleration Az' protrudes downward.

Referring to Fig. 23C, during uphill travelling, given that the inclination angle of a sloping road FC is a, the robot 1 travels on the sloping road FC at the rate V while being oriented upward with the inclination angle α with respect to the reference direction D1. In this case, since the Y direction of the robot 1 becomes parallel to the sloping road FC (travelling direction D2), the robot 1 has only the rate component in the Y direction, and has no rate component in the Z direction.

Thus, in the transient period during the robot 1 enters to the sloping road FC and runs onto the sloping road FC, the acceleration az caused by the rate Vz is not added to the robot 1 as in frictional surface travelling, and the acceleration of - g × cosθ caused by gravity is added to the robot 1. Accordingly, as represented by the waveform W212 in Fig. 24A, in the transient period of uphill travelling, the acceleration Az gradually increases from the - side to the + side according to cosθ.

As described above, during uphill travelling, since only the acceleration of-g × cos θ caused by gravity is added to the acceleration Az, the acceleration Az' becomes 0 (Az' = -g × cosθ - (-g × cosθ)). Accordingly, as represented by the waveform W222 in Fig. 24B, the acceleration Az' keeps substantially 0.

Accordingly, if the acceleration Az' is kept to be less than a reference value for a certain time, the travelling state determination unit 201 determines the travelling state of the robot 1 as frictional surface travelling (YES in S501). Meanwhile, if the acceleration Az' is not kept to be less than the reference value for the certain time, the travelling state determination unit 201 determines the travelling state of the robot 1 as uphill travelling (NO in S501).

In S404 in Fig. 19, the accelerations Az' for a certain time are stored in the memory. Thus, given that the processing in S501 starts at a time P24 as illustrated in Fig. 24, the travelling state determination unit 201 can calculate the waveform of the acceleration Az' from values of the acceleration Az' calculated during a certain time T24 starting from the time P24. When the waveform protrudes downward as represented by the waveform W221, the acceleration Az' is kept to be less than the reference value for the certain time, and the travelling state is determined as frictional surface travelling. Meanwhile, when the waveform is flat as represented by the waveform W222, the acceleration Az' is kept at the reference value or more for the certain time, the travelling state is determined as uphill travelling. The certain time T24 may be the above-described transient period. The reference value may be a value that is lower than 0 by a certain margin.

### (Idling processing)

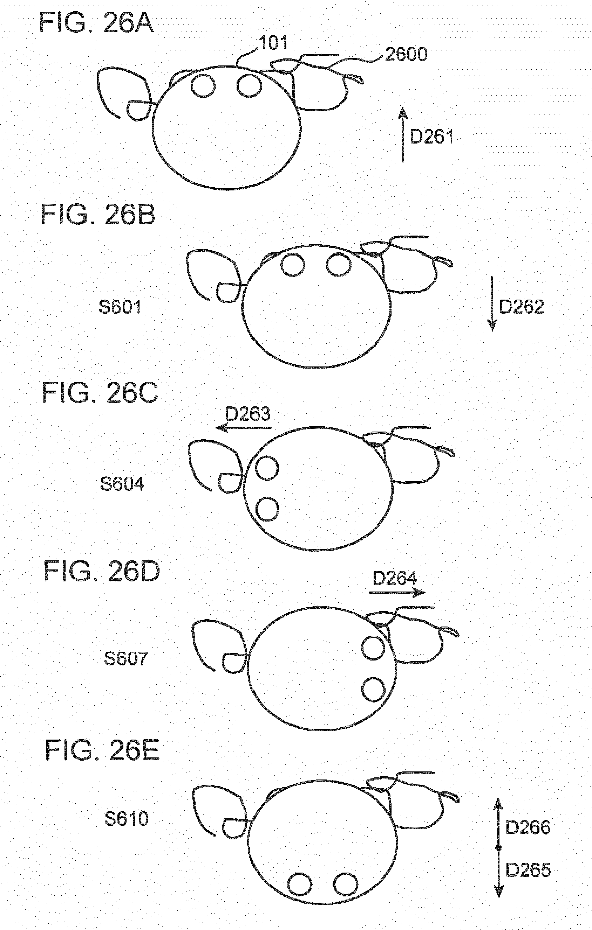

Fig. 25 is a flow chart illustrating details of idling control processing (S105 in Fig. 16). Figs. 26A, 26B, 26C, 26D, and 26E are views illustrating the idling control processing. Figs. 26A, 26B, 26C, 26D, and 26E illustrate the robot 1 when viewed from above. In Figs. 26B, 26C, 26D, and 26E, the step number expressed as "S + numeral value" corresponds to the step number expressed as "S + numeral value". In Fig. 26A, an obstacle 2600 obstructs movement of the robot 1, and the robot 1 is idling. In Fig. 26A, the obstacle 2600 is a power line and however, it is merely an example. For example, an object such as a wall may be the obstacle 2600.

First, as the robot 1 is idling due to the presence of the obstacle 2600 as illustrated in Fig. 26A, the avoidance action control unit 202 rotates the first drive wheel 110 and the second drive wheel 111 reversely (S601). In this case, the avoidance action control unit 202 may issue a command to reversely rotate the first drive wheel 110 and the second drive wheel 111 to the housing drive wheel control unit 214, thereby moving the robot 1 in an opposite direction D262 to the current travelling direction (D261). Thereby, as illustrated in Fig. 26B, the robot 1 attempts to travel in the direction D262.

Next, the travelling state determination unit 201 executes the moving state determination processing (S602). Details of the moving state determination processing is described with reference to Fig. 18 and thus, detailed description thereof is omitted.

Next, if the result in S602 indicates "moving state" (NO in S603), the robot 1 can travel in the direction D262, and the avoidance action control unit 202 rotates the robot 1 by 180 degrees (S613), to bring the robot 1 into normal travelling using the direction D262 as the travelling direction (S614).

In this case, the avoidance action control unit 202 may output a command to rotate the first drive wheel 110 and the second drive wheel 111 in opposite directions until the robot 1 rotates by 180 degrees to the housing drive wheel control unit 214, thereby rotating the robot 1 by 180 degrees. The avoidance action control unit 202 may monitor the rotational angle of the robot 1 in the yaw direction by integrating the angular velocity ωy in the yaw direction, which is detected by the angular velocity sensor 222, and determine that the robot 1 rotates by 180 degrees when the rotational angle becomes 180 degrees.

Meanwhile, if the result in S602 does not indicate "moving state" (YES in S603), the robot 1 cannot travel in the direction D261 or the direction D262, and the avoidance action control unit 202 rotates the robot 1 counterclockwise by 90 degrees to change the travelling direction of the robot 1 to a direction D263 (S604). In this case, as illustrated in Fig. 26C, the robot 1 attempts to travel in the direction D263.

Details of control of the avoidance action control unit 202 in S604 is the same as those in S601 and detailed description thereof will be omitted. This also applies below-mentioned S607 and S610.

Next, the travelling state determination unit 201 executes the moving state determination processing again (S605). Next, if the result in S605 indicates "moving state" (NO in S606), the robot 1 can travel in the direction D263, and the avoidance action control unit 202 brings the robot 1 into normal travelling using the direction D263 as the travelling direction (S614).

Meanwhile, if the result in S605 does not indicate "moving state" (YES in S606), the robot 1 cannot travel in the direction D261, D262 or the direction D263. Thus, the avoidance action control unit 202 rotates the robot 1 from the current travelling direction (direction D263) by 180 degrees as illustrated in Fig. 26D, to change the travelling direction of the robot 1 to a direction D264 (S607).

Next, the travelling state determination unit 201 executes the moving state determination processing again (S608). Next, if the result in S608 indicates "moving state" (NO in S609), the robot 1 can travel in the direction D264, and the avoidance action control unit 202 brings the robot 1 into normal travelling using the direction D264 as the travelling direction (S614).

Meanwhile, if the result in S608 does not indicate "moving state" (YES in S609), the robot 1 cannot travel in the direction D261, D262, D263 or the direction D264, and the avoidance action control unit 202 determines that the avoidance action cannot be made and executes the processing in S610 to S612.

In S610, as illustrated in Fig. 26E, the avoidance action control unit 202 rotates the robot 1 clockwise from the current travelling direction (direction D264) by 90 degrees to change the travelling direction of the robot 1 to a direction D265.

Next, the avoidance action control unit 202 outputs a command to move the counterweight 114 to an end in the opposite direction (D266) to the current travelling direction (D265) to the weight drive mechanism control unit 215 (S611). Next, when receiving the command, the weight drive mechanism control unit 215 moves the counterweight 114 to the rear end of the swing arm 116 (S612).

In this case, as illustrated in Fig. 11, the counterweight 114 is moved to the rear end of the swing arm 116, such that the robot 1 leans rearward as represented by the arrow 122. This imitates that the robot 1 hits against the obstacle 2600 and turns over.

### (Attitude direction control processing)

Fig. 27 is a flow chart illustrating details of attitude direction control processing (S106 in Fig. 16). The attitude direction control processing is executed when the travelling state of the robot 1 is determined as frictional surface travelling in S104.

First, the attitude control unit 203 acquires the attitude control angle θC set by the travelling state determination unit 201 in S410 in Fig. 19 (S701).

Next, the attitude control unit 203 calculates a movement amount of the counterweight 114, which corresponds to the attitude control angle θC (S702). In this case, a movement amount D of the counterweight is calculated according to the equation: D = K × Δθ.

Here, K is a coefficient for converting the attitude control angle θC into the movement amount, and is D_max/θ_max. D_max denotes the maximum amplitude of the counterweight 114. Given that the center of the swing arm in the front-rear direction is the default position of the counterweight 114 with reference to Fig. 3, the maximum amplitude D_max is a length from the center of the swing arm to the front or rear end. θ_max is the attitude angle θ of the robot 1 found when the counterweight 114 is located at the maximum amplitude D_max. Δθ is a difference between the current attitude angle θ and the attitude control angle θC. For example, when the current attitude angle is 0 degree, and the attitude control angle θC is 10 degrees, Δθ becomes 10 degrees.

Next, the attitude control unit 203 outputs a command to move the counterweight 114 forward by the movement amount D calculated in S702 to the weight drive mechanism control unit 215, thereby moving the counterweight 114 to the position corresponding to the attitude control angle θC (S703).

During frictional surface travelling, as illustrated in Fig. 23B, the Y direction of the robot 1 is tilted upward with respect to a travelling direction D2 by the attitude angle θ. To direct the Y direction to the travelling direction D2, the counterweight 114 may be moved forward by the movement amount D corresponding to the attitude angle θ. Thus, the attitude control unit 203 moves the counterweight 114 forward by the movement amount corresponding to the attitude control angle θC. This can match the Y direction with the travelling direction D2 to return the face of the robot 1 to the default position.

Therefore, the robot 1 in this embodiment can prevent from unnaturally travelling with the face oriented upward, depending on the material for the floor surface.

In this embodiment, even when the attitude angle θ becomes the lower limit angle θL or more, if the attitude angle θ returns to the angle less than lower limit angle θL for the determination time TD (NO in S407 in Fig. 19), the result is determined as no attitude change (S411), NO is selected in S204 in Fig. 17, and the travelling state is determined as normal travelling (S209).

In this case, for example, when the robot 1 runs onto a garbage on the wood flooring floor, and the face of the robot 1 is temporarily oriented upward, control to move the face of the robot 1 downward is not performed. This can prevent the robot 1 from unnaturally travelling with the face oriented downward after passing on the garbage.

In this embodiment, even when the attitude angle θ becomes 0 degree or more, if the attitude angle θ is less than the lower limit angle θL (NO in S407 in Fig. 19), the result is determined as no attitude change (S411), NO is selected in S204 in Fig. 17, and the travelling state is determined as normal travelling (S209).

In this case, the counterweight 114 is not moved. Although the face of the robot 1 is oriented slightly upward, the amount is small and thus, the face of the robot 1 need not be oriented downward. Thus, in this embodiment, the attitude angle θ is less than the lower limit angle θL, the result is determined as no attitude change.

In this embodiment, if the travelling state is determined as uphill travelling in S104 in Fig. 16, unlike the case where the travelling state is determined as frictional surface travelling, the attitude control processing is not executed.

As illustrated in Fig. 23C, while the robot 1 goes uphill, even when the face of the robot 1 is oriented upward, the direction is parallel to the travelling direction D2, which is not unnatural. Thus, when the robot 1 is going uphill, the robot 1 can be prevented from unnaturally travelling with the face of the robot 1 oriented downward.

In this embodiment, when the robot 1 cannot move due to the presence of the obstacle 2600, the counterweight 114 is moved to the rear end of the swing arm 116, and the face of the robot 1 is oriented above. This can imitate that the robot 1 hits against the obstacle 2600 and turns over.

### (Modification example 1)

In the above embodiment, when the robot 1 cannot move due to the presence of the obstacle 2600, the face of the robot 1 is oriented above to imitate that the robot 1 turns over. However, the present disclosure is not limited to this, and when the robot 1 cannot move due to the presence of the obstacle 2600, the counterweight 114 may be kept at the default position.

### (Modification example 2)

In the above embodiment, the acceleration sensor 221 is provided, but the acceleration sensor 221 may be omitted. In this case, frictional surface travelling and uphill travelling cannot be distinguished from each other based on the acceleration Az. However, in the case of frictional surface travelling, the attitude angle θ can be calculated from the angular velocity detected by the angular velocity sensor 222, directing the face of the robot 1 downward by the attitude angle θ.

### (Modification example 3)

In the above embodiment, as illustrated in Fig. 24, in the acceleration Az, upward is set as plus, and downward is set as minus. However, upward may be set as minus, and downward may be set as plus.

### (Overview of Embodiment of the Present Disclosure)

A robot according to an embodiment of the present disclosure is a robot including:
a spherical housing;
a frame disposed in the housing;
a display unit that is provided on the frame, and that displays at least a portion of a face of the robot;
a set of drive wheels that are provided on the frame, and that rotate and move the housing while being in contact with an inner circumferential face of the housing;
a weight drive mechanism that is provided on the frame, and that reciprocates a weight in a predetermined direction;
an angular velocity sensor that detects angular velocity about a crosswise direction that is perpendicular to a travelling direction of the housing; and
a control circuit that, if the control circuit determines, while the housing is being rotated and moved, that a rotational angle of the housing when viewed from front in the travelling direction changes upward beyond a predetermined angle based on a change in the angular velocity about the crosswise direction, moves the weight frontward in the travelling direction of the housing by a distance corresponding to the rotational angle.

In this embodiment, a weight drive mechanism that reciprocates the weight in a predetermined direction is provided on the frame, and an angular velocity sensor that detects angular velocity about the crosswise direction that is perpendicular to the travelling direction of the housing is provided.

If it is determined, while the housing is being rotated and moved, that the rotational angle of the housing when viewed from the front in the travelling direction changes upward beyond a predetermined angle based on a change in the angular velocity about the crosswise direction, it can be assumed that the position of the display unit is moved upward as the movement of the housing in the travelling direction when viewed in the travelling direction is restricted by friction between the housing and the floor surface. In this embodiment, in such case, the weight is moved forward in the travelling direction of the housing by a distance corresponding to the rotational angle.

Thereby, even when the movement of the housing in the travelling direction is restricted by friction between the housing and the floor surface, the display unit oriented upward due to the restriction can be turned downward.

As a result, the position of the robot's face, that is, the attitude of the robot can be prevented from unnaturally changing due to the material for the floor surface rather than internal processing of the robot, irrespective of the same travelling processing.

A robot according to another embodiment of the present disclosure is a robot including:
a spherical housing;
a frame that is disposed in the housing, and that includes a base;
a display unit that is provided on the frame, and that displays at least a portion of a face of the robot;
a set of drive wheels that are provided on the frame, and that rotate and move the housing while the drive wheels being in contact with an inner circumferential face of the housing;
a weight drive mechanism that is provided on the frame, and that reciprocates a weight in a predetermined direction;
an acceleration sensor that detects a first acceleration in a vertical direction that is perpendicular to the base;
an angular velocity sensor that detects angular velocity about a crosswise direction that is perpendicular to a travelling direction of the housing; and
a control circuit that acquires a second value by excluding a gravitational component from a first value indicative of the first acceleration outputted from the acceleration sensor, in which
if the control circuit determines, while the housing is being rotated and moved, that the second value changes from a reference value beyond a first change range and reaches a value corresponding to a downward direction that is perpendicular to the base, and that the rotational angle of the housing when viewed from the front in the travelling direction changes upward beyond a predetermined angle based on a change in the angular velocity about the crosswise direction, the control circuit moves the weight forward in the travelling direction of the housing by a distance corresponding to the rotational angle.

While the housing is being rotated and moved, when it is determined that the second value changes from a reference value beyond a first change range and reaches a value corresponding to a downward direction that is perpendicular to the base, and the rotational angle of the housing when viewed from the front in the travelling direction changes upward beyond a predetermined angle based on a change in the angular velocity about the crosswise direction, it can be assumed that the position of the display unit is moved upward as the movement of the housing in the travelling direction is restricted by friction between the housing and the floor surface. In this embodiment, in such case, the weight is moved forward in the travelling direction of the housing by a distance corresponding to the rotational angle.

Thereby, even when the movement of the housing in the travelling direction is restricted by friction between the housing and the floor surface, the display unit oriented upward due to the restriction can be turned downward.

As a result, the position of the robot's face, that is, the attitude of the robot can be prevented from unnaturally changing due to the material for the floor surface rather than internal processing of the robot, irrespective of the same travelling processing.

Preferably, in the above embodiment,
if the control circuit determines, while the housing is being rotated and moved, that the second value changes within the first change range, and that, the rotational angle of the housing when viewed from the front in the travelling direction changes upward beyond the predetermined angle based on the change in the angular velocity about the crosswise direction, the control circuit does not move the weight forward in the travelling direction of the housing.

For example, when the robot goes uphill, a force in the downhill direction is exerted onto the housing to restrict movement of the housing in the travelling direction. Also in this case, the display unit is moved upward.

While the robot goes uphill, even when the robot's face is oriented upward, it is not unnatural unlike the case where the robot travels on the carped having a high friction coefficient. When detection results of the acceleration sensor and the angular velocity sensor indicates that second value changes within the first change range, and that the rotational angle of the housing when viewed from the front in the travelling direction changes upward beyond the predetermined angle based the change in the angular velocity about the crosswise direction, the robot's face is oriented upward and further, the robot itself moves upward. Therefore, it can be estimated that the robot travels on a sloping road, for example.

Thus, from this embodiment, if it is determined, while the housing is being rotated and moved, that the second value changes within the first change range, and that the rotational angle of the housing when viewed from the front in the travelling direction changes upward beyond the predetermined angle based on the change in the angular velocity about the crosswise direction, the weight is not moved forward in the travelling direction of the housing.

Thus, even when the robot's face is oriented upward, the case where the robot goes uphill can be distinguished from the case where the robot travels on the carpet having a high friction coefficient. In the former case, the weight is not moved forward in the travelling direction of the housing, with the robot's face oriented upward.

This can prevent the robot's face from being corrected to unnaturally turn downward while the robot goes uphill.

Preferably, in the above embodiment,
the acceleration sensor detects a second acceleration in the travelling direction of the housing that is parallel to the base, and
while the housing is being rotated and moved, the control circuit moves the weight rearward in the travelling direction of the housing if the second value changes within the first change range, the change in the second acceleration falls within a second change range, and the change in the rotational angle of the housing falls within the predetermined angle.

For example, when the robot hits against a wall during travelling and becomes idle, waveforms outputted from the acceleration sensor and the angular velocity sensor indicate the following state. The second value changes within the first change range, the change in the second acceleration falls within a second change range, and the change in the rotational angle of the housing falls within the predetermined angle. That is, since the robot does not go uphill, but travels on the flat surface, the second value changes within the first change range. Since the robot hits against the wall and cannot move forward, the change in the second acceleration in the travelling direction of the housing falls within the second change range. Since the robot hits against the wall, but is not restricted in travelling by friction between the housing and the floor surface, the robot's face do not turn upward, and becomes idle without changing its attitude. Accordingly, the rotational angle of the housing falls within the predetermined angle.

Thus, from this embodiment, while the housing is being rotated and moved, it is determined that the robot hits against the wall or the like during travelling, and becomes idle if the second value changes within the first change range, the change in the second acceleration falls within a second change range, and the change in the rotational angle of the housing falls within the predetermined angle.

In this case, according to this embodiment, the weight is moved rearward in the travelling direction of the housing.

Thereby, when it is determined that the robot hits against the wall or the like during travelling, and becomes idle, the robot's face is oriented upward. That is, when the robot hits against the wall or the like during travelling, the robot's face is oriented upward on purpose to imitate that the robot hits against the wall and turns over.

The moving direction of the weight varies depending whether the robot hits against the wall or the like during travelling and becomes idle, or travels on the carpet having a high friction coefficient.

When the robot hits against the wall or the like during travelling and becomes idle, the robot's attitude is corrected to turn the robot's face upward on purpose as if the robot turns over. This can appeal the user that the robot hits against the wall or the like.

Preferably, in the above embodiment,
the acceleration sensor detects a second acceleration in the travelling direction of the housing that is parallel to the base, and
while the housing is being rotated and moved, the control circuit does not move the weight forward in the travelling direction of the housing if the second value changes within the first change range, a change in the second acceleration falls within a second change range, and a change in the rotational angle of the housing falls within the predetermined angle.

From this embodiment, when it is determined that the robot hits against the wall or the like during travelling and becomes idle, the weight is not moved forward in the travelling direction of the housing.

In this manner, the case where the robot hits against the wall or the like during travelling and becomes idle is distinguished from the case where the robot travels on the carpet having a high friction coefficient. In the former case, the robot is not restricted in travelling by friction between the housing and the floor surface. Thus, the weight is not moved forward in the travelling direction of the housing to remain the attitude of the robot unchanged.

This can prevent the robot's face from being corrected to unnaturally turn downward when the robot hits against the wall and becomes idle.

A robot according to another embodiment of the present disclosure is a robot including:
a spherical housing;
a frame that is disposed in the housing and that includes a base;
a display unit that is provided on the frame, and that displays at least a portion of a face of the robot;
a set of drive wheels that are provided on the frame, and that rotate and move the housing while being in contact with an inner circumferential face of the housing;
a weight drive mechanism that is provided on the frame, and that reciprocates a weight in a predetermined direction;
an acceleration sensor that detects a first acceleration in a vertical direction that is perpendicular to the base;
an angular velocity sensor that detects angular velocity about a crosswise direction that is perpendicular to a travelling direction of the housing; and
a control circuit that acquires a second value by excluding a gravitational component from a first value indicative of the first acceleration outputted from the acceleration sensor, in which
if the control circuit determines, while the housing is being rotated and moved, that the second value changes from a reference value beyond a first change range and reaches a value corresponding to a downward direction that is perpendicular to the base, and that the housing when viewed from the front in the travelling direction rotates from a reference position upward beyond a predetermined angle based on a change in the angular velocity about the crosswise direction, the control circuit determines a rotational angle of the housing based on a change in the angular velocity about the crosswise direction during a predetermined time after the start of the rotation by the housing from the reference position, and moves the weight from an initial position of the weight forward in the travelling direction of the housing by a distance corresponding to the rotational angle.

If it is determined, while the housing is being rotated and moved, that the second value changes from the reference value beyond a first change range and reaches a value corresponding to a downward direction that is perpendicular to the base, and that based on the change in the angular velocity about the crosswise direction, the housing rotates from the reference position upward when viewed from the front in the travelling direction beyond the predetermined angle, the display unit is estimated to move upward due to restriction of driving by friction or the like. Thus, from this embodiment, in such case, the rotational angle of the housing is determined based on the change in the angular velocity about the crosswise direction during a predetermined time after the start of the rotation of the housing from the reference position, and the weight is moved forward from an initial position of the weight in the travelling direction of the housing by a distance corresponding to the rotational angle.

Thereby, even when the movement of the housing in the travelling direction is restricted by friction between the housing and the floor surface, the display unit oriented upward due to the restriction can be turned downward.

As a result, the position of the robot's face, that is, the attitude of the robot can be prevented from unnaturally changing due to the material for the floor surface rather than internal processing of the robot, irrespective of the same travelling processing.

Preferably, in the above embodiment,
if the control circuit determines based on the change in the angular velocity about the crosswise direction that the rotation of the housing from the reference position returns to the predetermined angle or less before the predetermined time elapses, the control circuit does not move the weight.

For example, also when the housing runs onto a garbage on the wood flooring floor during the movement of the housing in the travelling direction, the display unit may be temporarily moved upward by friction between the housing and the floor surface. In such case, if the display unit is moved downward, when the robot travels with the face oriented downward even after passing on the garbage. Thus, from this embodiment, when it is determined based on the change in the angular velocity about the crosswise direction, the rotational of the housing from the reference position returns to the predetermined angle or less before the predetermined time elapses, control to move the weight is not performed.

This can prevent the robot from unnaturally travelling after passing on the garbage, with the face oriented downward.

Preferably, in the above embodiment,
while the housing is being rotated and moved, the control circuit does not move the weight if the control circuit determines that the second value changes from the reference value beyond the first change range and reaches the value corresponding to the downward direction that is perpendicular to the base, and that the upward rotation of the housing from the reference position when viewed from the front in the travelling direction falls within the predetermined angle based on the change in the angular velocity about the crosswise direction.

Even when movement in the travelling direction of the housing is restricted by friction between the housing and the floor surface, and the display unit is turned upward due to the restriction, if the turned angle is the predetermined angle or less, the change in the position of the robot's face due to the material for the floor surface is small. For this reason, control to move the weight is not performed.

Preferably, in the above embodiment,
while the housing is being rotated and moved, the control circuit does not move the weight if the control circuit determines that the second value changes within the first change range, and that the housing when viewed from the front in the travelling direction rotates from the reference position upward beyond the predetermined angle based on the change in the angular velocity about the crosswise direction.

Preferably, in the above embodiment,
the acceleration sensor detects a second acceleration in the travelling direction of the housing that is parallel to the base, and
while the housing is being rotated and moved, the control circuit moves the weight from an initial position of the weight rearward in the travelling direction of the housing if the control circuit determines that the second value changes within the first change range, that the change in the second acceleration falls within a second change range, and that the upward rotation of the housing from the reference position when viewed from the front in the travelling direction falls within the predetermined angle or less based on the change in the angular velocity about the crosswise direction.

Preferably, in the above embodiment,
the acceleration sensor detects a second acceleration in the travelling direction of the housing that is parallel to the base, and
while the housing is being rotated and moved, the control circuit does perform control to move the weight if the control circuit determines that the second value changes within the first change range, that the change in the second acceleration falls within a second change range, and that the upward rotation of the housing from the reference position when viewed from the front in the travelling direction falls within the predetermined angle or less based on the change in the angular velocity about the crosswise direction.

### Industrial Applicability

The present disclosure is advantageous in that the robot can be caused to travel without presenting unnatural appearance.

### Reference Signs List

A, Ay, Az acceleration
D movement amount
D_max maximum amplitude
D1 reference direction
D2 travelling direction
θ attitude angle
θC attitude control angle
θL lower limit angle
ω, ωp, ωy angular velocity
1 robot
3 cloud server
4 portable terminal
101 housing
102 frame
103 first rotational plate
104 second rotational plate
105 first display unit
106 second display unit
107 third display unit
108 camera
109 control circuit
110 first drive wheel
111 second drive wheel
112 first motor
113 second motor
114 counterweight
115 guide shaft
116 swing arm
117 rotational motor
118 rotating shaft
119 belt
120 motor pulley
200 main control unit
201 travelling state determination unit
202 avoidance action control unit
203 attitude control unit
205 display information output control unit
206 memory
210 communication unit
211 display unit
212 housing drive wheel
213 shaft control unit
214 housing drive wheel control unit
215 weight drive mechanism control unit
216 speaker
217 microphone
218 weight drive mechanism
219 attitude detection unit
221 acceleration sensor
222 angular velocity sensor
1500 robot system
1501, 1502 user
2600 obstacle

## Claims

1. A robot comprising:
a spherical housing;
a frame disposed in the housing;
a display unit that is provided on the frame, and that displays at least a portion of a face of the robot;
a set of drive wheels that are provided on the frame, and that rotate and move the housing while being in contact with an inner circumferential face of the housing;
a weight drive mechanism that is provided on the frame, and that reciprocates a weight in a predetermined direction;
an angular velocity sensor that detects angular velocity about a crosswise direction that is perpendicular to a travelling direction of the housing; and
a control circuit that, if the control circuit determines, while the housing is being rotated and moved, that a rotational angle of the housing when viewed from front in the travelling direction changes upward beyond a predetermined angle based on a change in the angular velocity about the crosswise direction, moves the weight frontward in the travelling direction of the housing by a distance corresponding to the rotational angle.

2. A robot comprising:
a spherical housing;
a frame that is disposed in the housing, and that includes a base;
a display unit that is provided on the frame, and that displays at least a portion of a face of the robot;
a set of drive wheels that are provided on the frame, and that rotate and move the housing while the drive wheels being in contact with an inner circumferential face of the housing;
a weight drive mechanism that is provided on the frame, and that reciprocates a weight in a predetermined direction;
an acceleration sensor that detects a first acceleration in a vertical direction that is perpendicular to the base;
an angular velocity sensor that detects angular velocity about a crosswise direction that is perpendicular to a travelling direction of the housing; and
a control circuit that acquires a second value by excluding a gravitational component from a first value indicative of the first acceleration outputted from the acceleration sensor, wherein
if the control circuit determines, while the housing is being rotated and moved, that the second value changes from a reference value beyond a first change range and reaches a value corresponding to a downward direction that is perpendicular to the base, and that the rotational angle of the housing when viewed from the front in the travelling direction changes upward beyond a predetermined angle based on a change in the angular velocity about the crosswise direction, the control circuit moves the weight forward in the travelling direction of the housing by a distance corresponding to the rotational angle.

3. The robot according to Claim 2, wherein
if the control circuit determines, while the housing is being rotated and moved, that the second value changes within the first change range, and that, the rotational angle of the housing when viewed from the front in the travelling direction changes upward beyond the predetermined angle based on the change in the angular velocity about the crosswise direction, the control circuit does not move the weight forward in the travelling direction of the housing.

4. The robot according to Claim 2 or 3, wherein
the acceleration sensor detects a second acceleration in the travelling direction of the housing that is parallel to the base, and
while the housing is being rotated and moved, the control circuit moves the weight rearward in the travelling direction of the housing if the second value changes within the first change range, the change in the second acceleration falls within a second change range, and the change in the rotational angle of the housing falls within the predetermined angle.

5. The robot according to Claim 2 or 3, wherein
the acceleration sensor detects a second acceleration in the travelling direction of the housing that is parallel to the base, and
while the housing is being rotated and moved, the control circuit does not move the weight forward in the travelling direction of the housing if the second value changes within the first change range, a change in the second acceleration falls within a second change range, and a change in the rotational angle of the housing falls within the predetermined angle.

6. A robot comprising:
a spherical housing;
a frame that is disposed in the housing and that includes a base;
a display unit that is provided on the frame, and that displays at least a portion of a face of the robot;
a set of drive wheels that are provided on the frame, and that rotate and move the housing while being in contact with an inner circumferential face of the housing;
a weight drive mechanism that is provided on the frame, and that reciprocates a weight in a predetermined direction;
an acceleration sensor that detects a first acceleration in a vertical direction that is perpendicular to the base;
an angular velocity sensor that detects angular velocity about a crosswise direction that is perpendicular to a travelling direction of the housing; and
a control circuit that acquires a second value by excluding a gravitational component from a first value indicative of the first acceleration outputted from the acceleration sensor, wherein
if the control circuit determines, while the housing is being rotated and moved, that the second value changes from a reference value beyond a first change range and reaches a value corresponding to a downward direction that is perpendicular to the base, and that the housing when viewed from the front in the travelling direction rotates from a reference position upward beyond a predetermined angle based on a change in the angular velocity about the crosswise direction, the control circuit determines a rotational angle of the housing based on a change in the angular velocity about the crosswise direction during a predetermined time after the start of the rotation by the housing from the reference position, and moves the weight from an initial position of the weight forward in the travelling direction of the housing by a distance corresponding to the rotational angle.

7. The robot according to Claim 6, wherein
if the control circuit determines based on the change in the angular velocity about the crosswise direction that the rotation of the housing from the reference position returns to the predetermined angle or less before the predetermined time elapses, the control circuit does not move the weight.

8. The robot according to Claim 6, wherein
while the housing is being rotated and moved, the control circuit does not move the weight if the control circuit determines that the second value changes from the reference value beyond the first change range and reaches the value corresponding to the downward direction that is perpendicular to the base, and that the upward rotation of the housing from the reference position when viewed from the front in the travelling direction falls within the predetermined angle based on the change in the angular velocity about the crosswise direction.

9. The robot according to Claim 6, wherein
while the housing is being rotated and moved, the control circuit does not move the weight if the control circuit determines that the second value changes within the first change range, and that the housing when viewed from the front in the travelling direction rotates from the reference position upward beyond the predetermined angle based on the change in the angular velocity about the crosswise direction.

10. The robot according to Claim 6, wherein
the acceleration sensor detects a second acceleration in the travelling direction of the housing that is parallel to the base, and
while the housing is being rotated and moved, the control circuit moves the weight from an initial position of the weight rearward in the travelling direction of the housing if the control circuit determines that the second value changes within the first change range, that the change in the second acceleration falls within a second change range, and that the upward rotation of the housing from the reference position when viewed from the front in the travelling direction falls within the predetermined angle or less based on the change in the angular velocity about the crosswise direction.

11. The robot according to Claim 6, wherein
the acceleration sensor detects a second acceleration in the travelling direction of the housing that is parallel to the base, and
while the housing is being rotated and moved, the control circuit does perform control to move the weight if the control circuit determines that the second value changes within the first change range, that the change in the second acceleration falls within a second change range, and that the upward rotation of the housing from the reference position when viewed from the front in the travelling direction falls within the predetermined angle or less based on the change in the angular velocity about the crosswise direction.
